# EUROPÄISCHE PATENTSCHRIFT

(11) **EP 2 386 211 B1**
(45) Veröffentlichungstag und Bekanntmachung des Hinweises auf die Patenterteilung: **10.08.2016**
(21) Anmeldenummer: 11165566.8
(22) Anmeldetag: 10.05.2011
(51) Int. Cl.: A23L 27/00, A23L 11/30

(54) **VERWENDUNG VON RUBUSOSID ZUM VERRINGERN ODER UNTERDRÜCKEN VON BESTIMMTEN UNANGENEHMEN GESCHMACKSEINDRÜCKEN**
USE OF RUBUSOSIDE TO REDUCE OR SUPPRESS PARTICULAR UNPLEASANT TASTE SENSATIONS
UTILISATION DE RUBUSOSIDE POUR LA RÉDUCTION OU LA SUPPRESSION D'IMPRESSIONS GUSTATIVES DÉSAGRÉABLES SPÉCIFIQUES

(30) Priorität: 11.05.2010 US 333435 P
(43) Veröffentlichungstag der Anmeldung: 16.11.2011
(73) Patentinhaber: Symrise AG, 37603 Holzminden (DE)
(72) Erfinder: Ley, Jakob Peter, 37603 Holzminden (DE); Reichelt, Katharina, 37603 Holzminden (DE); Riess, Thomas, 37603 Holzminden (DE); Langer, Kathrin, 37586 Dassel-Hilwartshausen (DE); Paetz, Susanne, 37671 Höxter (DE)
(74) Vertreter: Fabry, Bernd

(56) Entgegenhaltungen:
- EP-A1- 2 340 719
- WO-A1-2008/049256
- WO-A1-2009/016374
- WO-A1-2011/090709
- WO-A2-01/40902
- US-A1- 2009 035 427
- GUIXIN CHOU ET AL: "Quantitative and Fingerprint Analyses of Chinese Sweet Tea Plant (Rubus suavissimus S. Lee)", JOURNAL OF AGRICULTURAL AND FOOD CHEMISTRY, Bd. 57, Nr. 3, 11. Februar 2009 (2009-02-11), Seiten 1076-1083, XP55004462, ISSN: 0021-8561, DOI: 10.1021/jf8029397

## Beschreibung

Die Erfindung betrifft die Verwendung von Rubusosid sowie bestimmter Mischungen enthaltend Rubusosid, vorzugsweise die Verwendung von bestimmten Rubusosid enthaltenden Mischungen, insbesondere *Rubus suavissimus -* Extrakten, zum Maskieren, Verringern oder Unterdrücken eines bitterem, sauren und/oder adstringierenden Geschmackseindrucks. Die Erfindung betrifft ferner oral konsumierbare Zubereitungen, umfassend mindestens einen bitter, sauer und/oder adstringierend schmeckenden Stoff sowie Rubusosid oder bestimmte Rubusosid enthaltende Mischungen, dabei bevorzugt bestimmte *Rubus suavissimus -* Extrakte, ein entsprechendes Herstellungsverfahren solcher Zubereitungen sowie ein Verfahren zum Verringern oder Unterdrücken der bitteren, sauren und/oder adstringierenden Wirkung eines bitter, sauer und/oder adstringierend schmeckenden Stoffes. Ferner betrifft die Erfindung bestimmte Aromakompositionen, die besonders wirksam sind zum Maskieren, Verringern oder Unterdrücken eines bitteren, sauren und/oder adstringierenden Geschmackseindrucks.

Nahrungs- oder Genussmittel enthalten häufig verschiedene unangenehm schmeckende Stoffe, z.B. Bitterstoffe, stark saure Stoffe und adstringierende Stoffe, die zwar einerseits in Maßen erwünscht und charakteristisch sind (z.B. Coffein in Tee oder Kaffee, Tannine in Rotwein oder Grüntee, Chinin in sogenannten Bitter-Lemon-Getränken, Saponine oder Isoflavonoide bzw. deren Glycoside in Sojamilch, Hopfenextrakte in Bier, Frucht- oder Genusssäuren in süßen Säften), andererseits den Wert aber auch stark mindern können (z.B. Flavonoidglycoside und Limonoide in Zitrus-Säften, bitterer und/oder adstringierender Nachgeschmack vieler künstlicher Süßstoffe wie Aspartam oder Saccharin, hydrophobe Aminosäuren und/oder Peptide in Käse, Frucht- oder Genusssäuren ohne ausreichende Abmilderung durch süße Geschmacksstoffe, z.B. in Milchsäure enthaltenden Milchprodukten). Oft wird der unangenehme Geschmack noch durch unangenehme Gerüche verstärkt, z.B. wird in der oft bitter und adstringierend schmeckenden Sojamilch noch eine meist als "bohnig" bezeichnete Note als unangenehm beschrieben.

Bittergeschmack wird regelmäßig durch einzelne Stoffe (Beispiele vgl. unten) verursacht, die an spezielle Bitterrezeptoren auf Geschmackszellen (die in den sogenannten Geschmacksknospen auf der Zunge zu finden sind) binden und über neurochemische Kaskaden ein Signal an das Gehirn senden, dass eine Abwehrreaktion und einen negativen Geschmackseindruck verursacht (vgl. Wolfgang Meyerhof, Reviews of Physiology, Biochemistry and Pharmacology 2005, 154, 37-72).

Adstringierender Geschmack wird in der Regel durch Fällung von Prolin-reichen Proteinen im Speichel durch Adstringenzien, z.B. Metallsalze oder Tannine, verursacht. Der normalerweise als "Schmiermittel" dienende homogene Speichel enthält dann denaturierte Proteine, die die Gleitfähigkeit herabsetzen und dadurch ein raues oder trockenes, auch als adstringierend empfundenes Gefühl im Mund hinterlassen (Isabelle Lesschaeve, Ann C. Noble, American Journal of Clinical Nutrition 2005, 81, 330S-335S).

Saurer Geschmack wird durch Protonensäuren verursacht. Hierbei ist die sogenannte titrierbare Protonenkonzentration für den Säureeindruck maßgeblicher als der pH-Wert: so schmeckt beispielsweise eine Salzsäurelösung mit dem gleichem pH-Wert wie eine Äpfelsäurelösung schmeckt im Vergleich deutlich weniger sauer. Klassisch wird der aversive Säure-Geschmack durch Kombination mit süßen Geschmacksstoffen, vornehmlich Zucker, oder auch durch salzig schmeckende Stoffe, vor allem Natriumchlorid, stark gemildert, während der saure Geschmack durch bittere oder adstringierend schmeckende Stoffe deutlich unangenehmer empfunden wird. Dabei werden jedoch regelmäßig süß schmeckende Substanzen (beispielsweise Süßstoffen) in vergleichsweise hohe Konzentrationen verwendet, also in der Regel in einer Menge, welche bezüglich ihres süßen Geschmackseindruckes einer zumindest 2 Gew.-%ige wässrigen Sucroselösung (Saccharoselösung) entspräche, um dadurch den Säureeindruck deutlich abzumildern.

Einige Fruchtsäuren, insbesondere Zitronensäure, Bernsteinsäure, Äpfelsäure und Weinsäure, zeigen neben dem sauren Geschmack auch einen als adstringierend beschriebenen sensorischen Eindruck.

In einigen Nahrungsmitteln, insbesondere von süß-sauren Früchten oder Gemüsen abgeleitete Nahrungsmittel (z.B. Fruchtsäfte, Fruchtzubereitungen und daraus hergestellten Nahrungsmitteln) sowie fermentativ mit Hilfe von säureproduzierenden Mikroorganismen hergestellten Produkten (z.B. Joghurt, Ghee, Kefir, Soja-Joghurt, Sauerkraut, Sauerteigbrot, Wurstwaren, Sauermilch, Käse, Mixed Pickles, Lactobionsäure oder Glucuronsäure enthaltende Erfrischungsgetränke), ist die enthaltende Säure notwendig, um die mikrobielle Stabilität herzustellen. Bis zu einem gewissen Grade wird diese auch geschmacklich akzeptiert, in vielen Fällen besteht aber der Wunsch, sensorisch einen verringerten Säureeindruck zu erreichen ohne den für die Haltbarkeit notwendigen pH-Wert zu beeinflussen. Ebenso sind Nahrungsmittel zu betrachten, bei denen zur Erreichung einer ausreichend mikrobiellen oder auch antioxidativen Stabilität der pH-Wert mit Frucht- oder Genusssäuren eingestellt wird (z.B. Apfelsaft mit Ascorbinsäure, Erfrischungsgetränke mit Zitronen- oder Phosphorsäure, Dressings und Ketchup mit Essigsäure), der saure Geschmack aber regelmäßig zu stark empfunden wird und daher sensorisch gesenkt werden soll.

Zusammenfassend ist festzuhalten, dass es diverse Lebensmittel bzw. Nahrungsmittel gibt, die einen zu hohen, d.h. einen höher als gewünschten, sensorischen Säureeindruck vermitteln, der durch die natürliche Konzentration an Fruchtsäuren, fermentativ gebildete Säuren oder aus Stabilitätsgründen zugesetzten Säuren bedingt ist und wobei der pH-Wert der Lebensmittel bzw. Nahrungsmittel aus technologischen Gründen (mikrobielle Stabilität, antioxidative Stabilität etc., wie oben dargelegt) nicht verändert werden kann oder darf.

Es ist im Stand der Technik beschrieben worden, dass bestimmte Proteine wie Miraculin in Gegenwart von Säuren den Säureeindruck mehr oder weniger in einen süßen Geschmackseindruck umwandeln können (http://de.wikipedia.org/wiki/Miraculin). Diese Lösung ist aber auf Grund der Umwandlung in den in nicht-süßen Anwendungen unerwünschten süßen Geschmack nur begrenzt verwendbar und zudem mit 2-4 h zu lange anhaltend, dass dieser Effekt nur einen sehr eingeschränkten Nutzen hat.

Inzwischen sind zwar einige Ansätze zur Bitter-Reduktion beschrieben worden (z.B. Ley, J. P. (2008). "Masking Bitter Taste by Molecules." Chemosensory Perception 1(1): 58-77). Die beschriebenen Lösungsansätze zeigen aber alle einen oder mehrere Nachteile, wie nicht-Natürlichkeit, teure Rohstoffe, Nebeneffekte (Z.B. Süßunterdrückung, gleichzeitig salziger Geschmack etc.), Löslichkeitsprobleme, so dass weiterhin Bedarf an natürlichen, einfach zu verwendenden Bittermaskierungs-Lösungen besteht. Den Säureeindruck reduzierende und weitgehend neutral schmeckende Aromenlösungen, die nicht den pH-Wert der konsumierbaren Anwendung ändern, sind bisher nicht beschrieben worden.

Es war daher Aufgabe der vorliegenden Erfindung, Stoffe anzugeben, die den bitteren, sauren und/oder den adstringierenden Geschmackseindruck von Verbindungen maskieren, verringern oder unterdrücken können, auch in Zubereitungen, insbesondere in Nahrungs- und Genussmitteln sowie pharmazeutischen Mitteln, vorzugsweise ohne den sonstigen, erwünschten Geschmackseindruck dieser Zubereitungen wesentlich zu beeinflussen.

Diese Aufgabe wird erfindungsgemäß in einem ersten Aspekt gelöst durch die Verwendung von Rubusosid, vorzugsweise die Verwendung bestimmter Mischungen oder Pflanzenextrakte enthaltend Rubusosid, zum Maskieren, Verringern oder Unterdrücken eines bitteren, sauren und/oder adstringierenden Geschmackseindrucks eines bitter, sauer und/oder adstringierend schmeckenden Stoffes.

Überraschenderweise wurde gefunden, dass Rubusosid, insbesondere in Form der nachfolgend beschriebenen erfindungsgemäß zu verwendenden Mischungen sowie erfindungsgemäßen bzw. erfindungsgemäß einzusetzenden Aromakompositionen, einen bitteren, sauren und/oder adstringierenden Eindruck einer Vielzahl von unangenehm schmeckenden oral konsumierbaren Zubereitungen, die einen oder mehrere bitter, sauer und/oder adstringierend schmeckende Stoffe enthalten, maskieren, verringern oder sogar vollständig unterdrücken können.

Es ist bekannt, dass Extrakte aus *Rubus suavissimus* oder bestimmte daraus isolierte Verbindungen in der Lage sind, süß schmeckende oral konsumierbare Zubereitungen noch süßer schmecken zu lassen, wie in WO 2008/049256 beschrieben. Dieses Dokument betrifft ein gesüßtes Verbrauchsgut, umfassend a) wenigstens 0,0001% von wenigstens einem Süßstoff, wobei der Süßstoff Sucrose, Fructose, Glucose, Maissirup mit hohem Fructosegehalt, Maissirup, Xylose, Arabinose, Rhamnose, Erythritol, Xylitol, Mannitol, Sorbitol, Inositol, Acesulfam-Kalium, Aspartam, Neotam, Sucralose, Saccharin oder Kombinationen davon umfasst, wobei der wenigstens eine Süßstoff oder die Süßstoffkombination in einer Konzentration über der Süße-Nachweisgrenze in einer Konzentration von wenigstens gleichsüß wie 2% Sucrose vorhanden ist und b) mindestens einen Süßeverstärker, ausgewählt aus der Gruppe, bestehend aus Naringin-Dihydrochalkon, Mogrosid V, Swingle-Extrakt, Rubusosid, Rubus-Extrakt, Steviosid und Rebaudiosid A, wobei jeder Süßeverstärker in einer Konzentration nahe seiner Süße-Nachweisgrenze vorhanden ist, und wobei diese Konzentration für Naringin-Dihydrochalkon von 2 bis 60 ppm beträgt, für Rubusosid von 1,4 ppm bis 56 ppm, für Rubus-Extrakt von 2 ppm bis 80 ppm, für Mogrosid V von 0,4 ppm bis 12,5 ppm, für Swingle-Extrakt von 2 bis 60 ppm, für Steviosid von 2 bis 60 ppm, und für Rebaudiosid A von 1 bis 30 ppm. Dieses Dokument betrifft somit nur die Verstärkung der süßenden Wirkung eines Süßstoffes aus der unter a) genannten Gruppe durch einen Süßkraftverstärker aus der unter b) genannten Gruppe.

Das Dokument EP 2 340 719 A1 offenbart Aromazubereitungen, umfassend o-Kumarinsäure zur Reduzierung oder Unterdrückung unerwünschter Geschmackseindrücke von Süßstoffen. Zwar kann in den Aromakompositionen dieses Dokuments auch Rubososid, ggf. als Mischung mit phenolischen Verbindungen wie Hesperetin und Phloretin, oder ggf. als Extrakt aus *Rubus-Species,* z.B. *Rubus suavissimus,* enthalten sein, jedoch ist aus dem Dokument EP 2 340 719 A1 ersichtlich, dass Rubusosid als Süßstoff verwendet wird.

Das Dokument WO 2009/016374 A1 offenbart die Verwendung von *Rubus suavissimus* Extrakten in oral konsumierbaren Zubereitungen. Allerdings wird nur die synergistische Kombination zweier Süßstoffe offenbart, nämlich die Kombination aus a) einem Extrakt aus *Steva* und/oder von *Rubus (suavissimus)* und b) einem Extrakt aus *Cucurbitaceae* Familienmitglierdern, wobei das Verhältnis a:b im Bereich von 50:50 bis 95:05 liegt. Aus WO 2009/016374 A1 ist klar ersichtlich, dass Rubososid nur als Süßstoff verwendet wird.

Das Dokument US 2009/035427 A1 offenbart "Süßtee"-Zubereitungen ohne Zusatz künstlicher Süßstoffe, kedoch unter Verwendung von *Rubus suavissimus* Extrakten.

Auch in diesem Dokument geht es um die süßende Wirkung und Süßkraft von Rubososid.

Das Dokument WO 2011/090709 A1 betrifft Süßstoff-Zusammensetzungen, die einen Süßstoff und einen Süßstoffverstärker umfassen. Das Beispiel 4 auf Seite 38 nennt eine Zusammensetzung aus 8% HFSS (High Fructose Starch Syrup) und Rubososid (135 ppm) in einer "Zitrone-Limette"-aromatisierten Getränkezubereitung. Rubososid wird in einer Menge eingesetzt, die selbst noch nicht süßend wirkt, und es wird die süßkraftverstärkende Wirkung von Rubososid gemessen.

Zudem ist bekannt, dass isoliertes Rubusosid aus *Rubus suavissimus* ab einer Konzentration von ca. 25 mg/kg (entsprechend 25 ppm) erkennbar süß schmeckt (Erkennungsgeschmacksschwellenwert). Rubusosid kann als Süßstoff verwendet werden (Hirono, S.; Chou, W. H.; Kasai, R.; Tanaka, O.; Tada, T., Sweet and bitter diterpene glucosides from leaves of Rubus suavissimus. Chemical & Pharmaceutical Bulletin 1990, 38, (6), 1743-1744). In eigenen Versuchen wurde gefunden, dass Rubusosid in einer Konzentration von 100 mg/kg (entsprechend 100 ppm) in Wasser einen süßen Geschmack aufweist, welcher der Süße einer 1,4 %igen wässrigen Sucroselösung entspricht.

In eigenen Versuchen wurde ferner gefunden, dass Rubusosid oberhalb einer Konzentration von 100 mg/kg in Wasser zudem einen erkennbaren bitteren Geschmack zeigt.

In JP 2008043287 wird beschrieben, wie die unangenehm schmeckenden Stoffe, die in einem konventionell hergestellten *Rubus suavissimus -* Extrakt enthalten sein können, verringert werden können. Grundsätzlich ist dem Fachmann auch bekannt, dass der Einsatz von Süßstoffen in deutlich süß schmeckenden Konzentrationen zur Unterdrückung unangenehmer Geschmackseindrücke verwendet werden können.

Allerdings ist es überraschend, dass Rubusosid, vorzugsweise in Form einer erfindungsgemäß zu verwendenden Mischung, insbesondere in Form bestimmter *Rubus suavissiums -* Extrakte, die unangenehmen Geschmackseindrücke bitter, sauer und/oder adstringierend, insbesondere einen sauren und gegebenenfalls zusätzlich adstringierenden Geschmackseindruck, vermindern kann, auch in Konzentrationen, die noch nicht als deutlich süß empfunden werden.

Besonders überraschend ist dabei, dass bestimmte Mischungen enthaltend Rubusosid, insbesondere in Form bestimmter *Rubus suavissiums -* Extrakte, eine deutlich bessere Wirkung hinsichtlich des sauren und adstringierenden Geschmackseindrucke entfalten als Rubusosid alleine, wie in Anwendungsbeispiel 6 am Beispiel eines Joghurts dargelegt.

In einer bevorzugten Ausgestaltung betrifft die vorliegende Erfindung die Verwendung einer Mischung umfassend
(a) Rubusosid, und
(b) eine oder mehrere phenolische Verbindungen, vorzugsweise ein oder mehrere Polyphenole, vorzugsweise ein oder mehrere Polyphenole wie sie in einer *Rubus-*Species, bevorzugt in *Rubus suavissimus,* vorkommen.

In einer weiter bevorzugten Ausgestaltung betrifft die vorliegende Erfindung die Verwendung eines Extraktes einer *Rubus-Species* ist, vorzugsweise eines Extraktes aus den Blättern und gegebenenfalls den Stängeln einer Rubus-Species, bevorzugt aus den Blättern und gegebenenfalls den Stängeln von *Rubus suavissimus.*

Polyphenole im engeren Sinne des vorliegenden Textes sind Verbindungen, die zwei oder mehr direkt an einen aromatischen Ring gebundene Hydroxylgruppen enthalten.

Die erfindungsgemäß zu verwendenden Mischungen enthalten neben (a) Rubusosid vorzugsweise ein, zwei, drei oder mehr phenolische Verbindungen, vorzugsweise e ein, zwei, drei oder mehr Polyphenole, wobei ein, zwei, drei oder mehr Polyphenole des Bestandteils (b) bevorzugt ausgewählt sind aus der Gruppe bestehend aus Ellagsäure, Gallussäure und Flavonoiden, dabei vorzugsweise Quercetinglycosiden, dabei insbesondere Rutin und Isoquercitrin.

Bevorzugte erfindungsgemäß zu verwendende Mischungen enthalten folgende Bestandteile:
(a) Rubusosid in einer Menge im Bereich von 0,1 bis 50 Gew.-%, bevorzugt im Bereich von 0,5 bis 30 Gew.-%, besonders bevorzugt im Bereich von 1 bis 25 Gew.-%,
(b) eine oder mehrere phenolische Verbindungen, vorzugsweise ein oder mehrere Polyphenole, in einer Gesamtmenge im Bereich von 0,1 Gew.-% bis 25 Gew.-%, bevorzugt im Bereich von 0,5 Gew.-% bis 15 Gew.-%, weiter bevorzugt im Bereich von 1 Gew.-% bis 10 Gew.-%, besonders bevorzugt im Bereich von 2 Gew.-% bis 8 Gew.-%,
   und
(c) gegebenenfalls ein oder mehrere oral konsumierbare flüssige Verdünnungsmittel, vorzugsweise ausgewählt aus der Gruppe bestehend aus Ethanol, 1,2-Propylenglycol, Pflanzenöltriglyceride, Triacetin und/oder Glycerin, bevorzugt in einer Menge im Bereich von 1 bis 75 Gew.-%, bevorzugt im Bereich von 5 bis 50 Gew.-%, besonders bevorzugt im Bereich von 10 bis 40 Gew.-%,
jeweils bezogen auf das Gesamtgewicht der Mischung.

Die erfindungsgemäß bevorzugt zu verwendenden Extrakte einer *Rubus-Species,* vorzugsweise Extrakte gewonnen aus den Blättern und gegebenenfalls den Stängeln einer Rubus-Species, bevorzugt aus den Blättern und gegebenenfalls den Stängeln von *Rubus suavissimus,* sind erhältlich oder werden erhalten durch ein Verfahren, umfassend folgende Schritte:
a) Extraktion von Blättern und gegebenenfalls Stengeln mit einem geeigneten Extraktionsmittel, vorzugsweise ausgewählt aus der Gruppe bestehend aus Wasser, sub-oder superkritischem Wasser, superkritischem CO₂, Wasser-Ethanol-Gemische, Ethanol, Essigsäureethylester, n-Heptan und n-Hexan, bei einer Temperatur im Bereich von 0°C bis zur Siedetemperatur des oder der jeweiligen Extraktionsmittel, unter Normaldruck, reduziertem oder erhöhtem Druck, vorzugsweise durch Soxhlet-, Gegenstrom-, Perkolations- oder einfaches Siebkorbverfahren, wodurch ein Primärextrakt erhalten wird,
b) gegebenenfalls Aufkonzentrierung des in Schritt a) erhaltenen Primärextraktes, vorzugsweise durch destillative oder andere evaporative oder pervaporative Verfahren,
c) Behandlung des (gegebenenfalls in Schritt b) aufkonzentrierten) Primärextraktes mit einem oder mehreren Adsorbentien, vorzugsweise ausgewählt aus der Gruppe bestehend aus Kieselgel, Aktivkohle, Kieselgur, Aluminiumoxid, basischer, saurer oder neutraler Ionentauscher, vorzugsweise im Batch oder Säulenverfahren, wodurch ein aufgereinigter Extrakt (Sekundärextrakt) erhalten wird,
d) Trocknung des in Schritt c) erhaltenen Sekundärextraktes, vorzugsweise durch ein evaporatives oder pervaporatives Verfahren,
e) gegebenenfalls Mischen des in Schritt d) erhaltenen getrockneten Sekundärextraktes mit einem geeigneten Verdünnungsmittel oder einem Gemisch zweier oder mehrerer Verdünnungsmittel, bevorzugt Ethanol, 1,2-Propylenglycol, Pflanzenöltriglycerid(en), Triacetin und/oder Glycerin, so dass vorzugsweise eine Lösung erhalten wird.

Vorzugsweise werden die unmittelbar nach der Ernte getrockneten, Blätter und gegebenenfalls auch Stängel der Rubus-Spezies, vorzugsweise von *Rubus suavissimus,* in das obige Verfahren eingesetzt.

Evaporative oder pervaporative Verfahren können z.B. Destillation, Sublimation, Wasserdampfdestillation, Gefriertrocknung, pervaporative Membranverfahren, Sprühtrocknung sein, wobei dazu auch vor dieser Behandlung geeignete Hilfs- und Trägerstoffe zugesetzt werden können.

Dabei wird das obige Verfahren zur Herstellung des Extraktes vorzugsweise dergestalt durchgeführt, dass der Extrakt umfasst:
(a) Rubusosid in einer Menge im Bereich von 0,1 bis 50 Gew.-%, bevorzugt im Bereich von 0,5 bis 30 Gew.-%, besonders bevorzugt im Bereich von 1 bis 25 Gew.-%, und
(b) eine oder mehrere phenolische Verbindungen, vorzugsweise ein oder mehrere Polyphenole, in einer Gesamtmenge im Bereich von 0,1 Gew.-% bis 25 Gew.-%, bevorzugt im Bereich von 0,5 Gew.-% bis 15 Gew.-%, weiter bevorzugt im Bereich von 1 Gew.-% bis 10 Gew.-%, besonders bevorzugt im Bereich von 2 Gew.-% bis 8 Gew.-%,
jeweils bezogen auf das Gesamtgewicht des Extraktes.

Die erfindungsgemäß besonders bevorzugt zu verwendenden Mischungen, insbesondere Extrakte von *Rubus suavissimus,* enthalten neben (a) Rubusosid vorzugsweise ein, zwei, drei oder sämtliche Polyphenole aus der Gruppe bestehend aus Ellagsäure, Gallussäure Rutin und Isoquercitrin, wobei die Mischung bzw. der Extrakt weiter bevorzugt zumindest Ellagsäure enthält, vorzugsweise Ellagsäure in einer Menge von größer oder gleich 0,05 Gew.-%, weiter bevorzugt in einer Menge von größer oder gleich 0,1 Gew.-%, insbesondere bevorzugt in einer Menge von größer oder gleich 0,15 Gew.-%, bezogen auf das Gesamtgewicht der Mischung bzw. des Extraktes.

Weiter bevorzugte erfindungsgemäß zu verwendende Mischungen bzw. Extrakte sind dadurch gekennzeichnet, dass das Gewichtsverhältnis von Bestandteil (a) Rubusosid zur Gesamtmenge der phenolischen Verbindungen, vorzugsweise zur Gesamtmenge der Polyphenole, des Bestandteils (b) im Bereich von 100 : 1 bis 1 : 10, bevorzugt im Bereich von 50 : 1 bis 1 : 5 liegt, weiter bevorzugt im Bereich von 10 : 1 bis 1 : 1, besonders bevorzugt im Bereich von 5 : 1 bis 1 : 1, jeweils bezogen auf das Gesamtgewicht der Mischung bzw. des Extraktes.

Ebenfalls erfindungsgemäß bevorzugt ist die Verwendung einer Mischung, die neben Rubusosid, vorzugsweise in Form eines erfindungsgemäß zu verwendenden *Rubus suavissimus -* Extraktes, zusätzlich umfasst:
- einen oder mehrere weitere bittermaskierende Aroma- und/oder Geschmackstoffe, vorzugsweise ausgewählt aus der Gruppe bestehend aus
- Natriumsalzen, dabei vorzugsweise Natriumchlorid, Natriumlactat, Natriumcitrat, Natriumacetat, Natriumgluconoat,
- Hydroxyflavanonen, dabei vorzugsweise Eriodictyol, Homoeriodictyol,
- Hesperetin und dessen Natriumsalzen,
- Hydroxybenzoesäureamiden, dabei vorzugsweise 2,4-Dihydroxybenzoesäurevanillylamid, 2,4-Dihydroxybenzoesäure-*N*-(4-hydroxy-3-methoxybenzyl)amid-Mono-natriumsalz,
- Hydroxydeoxybenzoinen, dabei vorzugsweise 2-(4-Hydroxy-3-methoxyphenyl)-1-(2,4,6-trihydroxyphenyl)ethanon,
- Hydroxyphenylalkandionen, dabei vorzugsweise Gingerdion-[2] und Gingerdion-[3],
- Diacetyltrimeren,
- gamma-Aminobuttersäure,
- Divanillinen,
- 4-Hydroxydihydrochalconen, dabei vorzugsweise Phloretin,
- Deoxybenzoinen, dabei vorzugsweise 2-(4-Hydroxyphenyl)-1-(4-hydroxy-3-methoxyphenyl)ethanon, und
- Hydroxyflavanen, dabei vorzugsweise 3',7-Dihydroxy-4'-methoxyflavan,
   und
- vorzugsweise einen oder mehrere speichelfördernde Aroma- und/oder Geschmackstoffe.

Daneben ist es vorteilhaft, wenn die zum Maskieren, Verringern oder Unterdrücken des oder der bitter, sauer und/oder adstringierend schmeckenden Stoffe eingesetzte Menge an Rubusosid nicht ausreicht, einen süßen Geschmackseindruck hervorzurufen, der größer ist als der süße Geschmackseindruck einer 1,5 Gew.-%igen wässrigen Sucroselösung. Ab einer solchen Menge macht sich die Eigensüße des Rubusosids in manchen oral konsumierbaren Zubereitungen und Zubereitungsarten zu stark bemerkbar, so dass ein unerwünschte Veränderung des Geschmacksprofils der Zubereitung die Folge sein kann und teilweise unerwünschte sensorische, insbesondere geschmackliche, Nebeneffekte auftreten können.

Die beschriebene Verwendung von Rubusosid bzw. von Mischungen oder Extrakten enthaltend Rubusosid findet bevorzugt Anwendung in einer zur oralen Aufnahme bestimmten pharmazeutischen oder einer der Ernährung, der Mundpflege oder dem Genuss dienenden Zubereitung.

Für die nachfolgend beschriebenen erfindungsgemäßen oral konsumierbaren Zubereitungen gelten die obigen oder nachfolgenden Angaben zu bevorzugten und besonders bevorzugten erfindungsgemäßen Verwendungen bzw. erfindungsgemäßen bzw. erfindungsgemäß einzusetzenden Aromakompositionen entsprechend.

In einem weiteren Aspekt betrifft die vorliegende Erfindung eine oral konsumierbare Zubereitung, enthaltend
(i-a) Rubusosid in einer Menge im Bereich von 1 - 200 mg/kg (entsprechend 1 - 200 ppm), bevorzugt im Bereich von 10 - 150 ppm, weiter bevorzugt im Bereich von 30 bis 100 ppm, besonders bevorzugt im Bereich von 50 - 100 ppm, insbesondere bevorzugt im Bereich von 65 - 100 ppm, jeweils bezogen auf das Gesamtgewicht der oral konsumierbaren Zubereitung, vorzugsweise in Form einer oben beschriebenen erfindungsgemäß zu verwendenden Mischung, bevorzugt in Form eines Extraktes von *Rubus suavissismus,* vorzugsweise in einer der als bevorzugt angegebenen Ausgestaltungen,
(i-b) einen oder mehrere bitter, sauer und/oder adstringierend schmeckende Stoffe, in einer Menge, welche in einer ansonsten identisch zusammengesetzten oral konsumierbaren Vergleichszubereitung ohne Bestandteil (i-a) wahrnehmbar bitter, sauer und/oder adstringierend schmeckt,
und die Menge an Bestandteil (i-a) ausreicht, um im Vergleich mit der Vergleichszubereitung den bitteren, sauren und/oder adstringierenden Geschmackseindruck des oder der bitter, sauer und/oder adstringierend schmeckenden Stoffe zu maskieren, verringern oder unterdrücken.

In der noch unveröffentlichten DE 10 2009 046 126.4 und den darauf basierenden Anmeldungen (Symrise GmbH & Co. KG) sind zwei konkrete oral konsumierbare Zubereitungen offenbart. Solche Zubereitungen sind nicht Gegenstand der vorliegenden Erfindung.

In einer bevorzugten Ausführungsform handelt es sich bei einer erfindungsgemäßen oral konsumierbaren Zubereitung demnach nicht um ein Erfrischungsgetränk bestehend aus 8 Gew.-% Zucker (Sucrose), 0,15 Gew.-% Zitronensäure, 0,1 Gew.-% Zitronenaroma, 0,050 Gew.-% ethanolisch-wässriger Mondia whitei Wurzel-Extrakt, zu 5% gelöst in 1,2-Propandiol, wobei diese Lösung 0,015 Gew.-% 2-Hydroxy-4-methoxybenzaldehyd enthielt, 0,010 Gew.-% Extrakt aus Rubus suavissimus, enthaltend 5 Gew.-% Rubusosid bezogen auf das Gesamtgewicht des Extraktes und 91,69 Gew.-% Wasser.

In bevorzugten Ausführungsformen ist eine erfindungsgemäße oral konsumierbare Zusammensetzung kein Erfrischungsgetränk, welches sämtliche der folgenden Bestandteile umfasst oder bei dessen Herstellung sämtliche der folgenden Bestandteile eingesetzt werden: Sucrose, Zitronensäure, Zitronenaroma, 2-Hydroxy-4-methoxybenzaldehyd, Rubusosid oder einen Rubusosid enthaltenden Extrakt aus Rubus suavissimus, 1,2-Propandiol und Wasser.

In einer bevorzugten Ausführungsform handelt es sich ferner bei einer erfindungsgemäßen oral konsumierbaren Zubereitung demnach nicht um Tomatenketchup bestehend aus 2 Gew.-% Kochsalz, 1 Gew.-% Stärke, 8,4 Gew.-% Zucker (Sucrose), 30 Gew.-% Tomatenkonzentrat zweifach, 18 Gew.-% Glucosesirup 80 Brix, 3 Gew.-% Branntweinessig 10%, 0,005 Gew.-% ethanolisch-wässriger Mondia whitei Wurzel-Extrakt, zu 5% gelöst in 1,2-Propandiol, wobei diese Lösung 0,015 Gew.-% 2-Hydroxy-4-methoxybenzaldehyd enthielt, 0,010 Gew.% Extrakt aus Rubus suavissimus, enthaltend 5 Gew.-% Rubusosid, 0,1 Gew.-% Hesperetin 2,5%ig in Propylenglycol und 37,485 Gew.-% Wasser.

In bevorzugten Ausführungsformen ist eine erfindungsgemäße oral konsumierbare Zusammensetzung kein Tomatenketchup, welches sämtliche der folgenden Bestandteile umfasst oder bei dessen Herstellung sämtliche der folgenden Bestandteile eingesetzt werden: Kochsalz, Stärke, Sucrose, Tomatenkonzentrat, Glucosesirup, Branntweinessig, 2-Hydroxy-4-methoxybenzaldehyd, Rubusosid oder einen Rubusosid enthaltenden Extrakt aus Rubus suavissimus, Hesperetin, 1,2-Propandiol, Propylenglycol und Wasser.

Die oral konsumierbare Zubereitung weist vor Zugabe bzw. bei Abwesenheit von Rubusosid, einer erfindungsgemäß einzusetzenden Mischung, eines erfindungsgemäß bevorzugt zu verwendenden *Rubus -* Extraktes oder einer erfindungsgemäßen bzw. erfindungsgemäß einzusetzenden Aromakomposition (wie nachfolgend beschrieben), einen wahrnehmbar bitteren, sauren und/oder adstringierenden Geschmack auf, vorzugsweise einen wahrnehmbar sauren und gegebenenfalls zusätzlich adstringierenden Geschmack.

Dies ist regelmäßig dann der Fall, wenn zumindest ein bitter, sauer und/oder adstringierend schmeckender Stoff in der Zubereitung in einer Konzentration vorliegt, die über der betreffenden Erkennungsgeschmacksschwelle für den bitter, sauren bzw. adstringierenden Geschmackseindruck liegt.

Besonders bevorzugt sind erfindungsgemäße oral konsumierbare Zubereitungen, die zumindest einen bitteren, sauren und/oder einen adstringierend schmeckenden Stoff umfassen, wobei die Menge des bitteren, sauren und/oder des adstringierend schmeckenden Stoffes ausreicht, um in einer Vergleichszubereitung, die keine erfindungsgemäße bzw. erfindungsgemäß einzusetzende Aromakomposition umfasst, aber ansonsten identisch zusammengesetzt ist, als unangenehmer bitterer, saurer und/oder adstringierender Geschmack wahrgenommen zu werden, und die Menge der erfindungsgemäßen bzw. erfindungsgemäß einzusetzenden Aromakomposition in der Zubereitung ausreicht, um im Vergleich mit der Vergleichszubereitung den unangenehmen Geschmackseindruck des bitteren, sauren und/oder des adstringierend schmeckenden Stoffes sensorisch zu verändern, zu maskieren oder zu vermindern. Dies ist insbesondere dann der Fall, wenn die bitteren, sauren und/oder einen adstringierend schmeckenden Stoffe jeweils einzeln in einer Konzentration vorliegen, die deutlich oberhalb der Erkennungsgeschmacksschwelle des jeweiligen Stoffes liegt, vorzugsweise in einer Menge vorliegen, welche der doppelten Erkennungsgeschmacksschwelle oder einer noch höheren Konzentration entspricht.

Eine bevorzugte oral konsumierbare erfindungsgemäße Zubereitung ist eine, wobei Bestandteil
(i-b) in einer Menge vorliegt, die zumindest doppelt, so hoch ist wie
   - der Erkennungsgeschmacksschwellenwert des bitter, sauer oder adstringierend schmeckenden Stoffes bzw. der niedrigste Erkennungsgeschmacksschwellenwert des bitter, sauer und/oder adstringierend schmeckenden Stoffes, wenn dieser zumindest zwei oder sämtliche der Geschmackseindrücke bitter, sauer und adstringierend vermittelt, sofern die Zubereitung lediglich einen bitter, sauer und/oder adstringierend schmeckenden Stoff enthält,
      oder
   - der niedrigste Erkennungsgeschmacksschwellenwert der bitter, sauer und/oder adstringierend schmeckenden Stoffe, sofern die Zubereitung mehr als einen bitter, sauer und/oder adstringierend schmeckenden Stoff enthält,
ausgenommen eine Zubereitung aus den Bestandteilen 12,50 Gew.-% Butter (82% Fett), 6,00 Gew.-% Zucker (Sucrose), 5,00 Gew.-% Magermilchpulver, 2,50 Gew.-% Glukosesirup (72%), 0,65 Gew.-% Emulgator SE 30 (Grindstedt Products, Dänemark), 0,20 Gew.-% Vanillearoma (Produkt 222292, Symrise), 2,00 Gew.-% Sorbitol, 0,01 Gew.-% Rebausid A, 0,010 Gew.-% Extrakt aus *Rubus suavissismus* enthaltend 5 Gew.-% Rubusosid, 0,10 Gew.-% Hesperetin (2,5% in 1,2-Propylenglykol), 0,05 Gew.-% Phloretin (2,5% in 1,2-Propylenglykol), 0,0001 Gew.-% ö-Kumarinsäure und Magermilch auf 100 Gew.-%.

Die Erkennungsgeschmacksschwelle ist dadurch definiert, dass mehr als 50% der Tester bei einer aufsteigenden Konzentrationsreihe des betreffenden Stoffs in der Zubereitung diesen mit einem eindeutigen Geschmacksattribut belegen können. Je höher die tatsächliche Konzentration der bitter, sauer und/oder adstringierend schmeckende Stoffe in der Zubereitung im Vergleich zu deren Schwellenwerten sind, desto stärker ist deren sensorischer Eindruck. Der Erkennungsschwellenwert wird für die verschiedenen Geschmackseindrücke separat bestimmt und kann für ein und denselben Stoff, der mehr als eine unangenehme sensorische Eigenschaft hat, verschiedene Werte für diese Geschmacksqualitäten haben. Eine Liste ausgewählter Schwellenwerte für bitter bzw. adstringierend schmeckende Stoffe finden sich in Stark, T.; Hofmann, T., Application of a Molecular Sensory Science Approach to Alkalized Cocoa (Theobroma cacao): Structure Determination and Sensory Activity of Nonenzymatically C-Glycosylated Flavan-3-ols, J. Agric. Food Chem. 2006, 54, 9510-9521 oder Scharbert, S.; Jezussek, M.; Hofmann, T., Evaluation of the taste contribution of theaflavines in black tea infusions using the taste activity concept. Eur. Food Res. Technol. 2004, 218, 442-447. Schwellenwerte für saure Verbindungen findet man z.B. in Stark, T.; Bareuther, S.; Hofmann, T., Molecular Definition of the Taste of Roasted Cocoa Nibs (Theobroma cacao) by Means of Quantitative Studies and Sensory Experiment. J. Agric. Food Chem. 2006, 54, (15), 5530-5539.

In einer weiter bevorzugten Ausgestaltung betrifft die vorliegende Erfindung eine oral konsumierbare Zubereitung, wobei Bestandteil
(i-b) einen oder mehrere sauer und optional adstringierend schmeckende Stoffe in einer Menge umfasst, welche in einer ansonsten identisch zusammengesetzten oral konsumierbaren Vergleichszubereitung ohne Bestandteil (a) wahrnehmbar sauer sowie gegebenenfalls zusätzlich adstringierend schmeckt,
   und/oder
   wobei Bestandteil
(i-b) einen oder mehrere sauer und adstringierend schmeckende Stoffe umfasst, welche vorzugsweise ausgewählt sind aus der Gruppe bestehend aus Ascorbinsäure, Benzoesäure, Glucuronsäure, Adipinsäure, Glutarsäure, Malonsäure, Bernsteinsäure, Äpfelsäure, Essigsäure, Citronensäure, Weinsäure, Phosphorsäure, Quercitrin, Gallus-oder Ellagsäureester von Kohlenhydraten, dabei insbesondere Pentagalloylglucose, optional galloylierte Catechine, optional galloylierte Epicatechine, Proanthocyanidine, Procyanidine, Thearubigenin, gamma-Oryzanol, Kaffeesäure oder deren Ester, dabei insbesondere Chlorogensäure und deren Isomere.

In einer weiter bevorzugten Ausgestaltung betrifft die vorliegende Erfindung eine oral konsumierbare Zubereitung, zusätzlich enthaltend
(ii) einen oder mehrere weitere bittermaskierende Aroma- und/oder Geschmackstoffe, und gegebenenfalls
(iii) einen oder mehrere weitere Aromastoffe, wobei vorzugsweise wenigstens ein Aromastoff ein Schlechtgerüche unterdrückender Aromastoff ist,
   und gegebenenfalls
(iv) einen oder mehrere speichelfördernde Aroma- und/oder Geschmackstoffe,
   und gegebenenfalls
(v) einen oder mehrere Hilfs- oder Trägerstoffe.

Bittermaskierende Aroma- und/oder Geschmackstoffe können jeweils ausgewählt werden aus der Gruppe bestehend aus Nucleotiden, wie zum Beispiel Adenosin-5'-monophosphat, Cytidin-5'-monophosphat, Inosin-5'-monophosphat, und deren pharmazeutisch akzeptablen Salzen; Lactisolen; 2,4-Dihydroxybenzoesäure; 3-Hydroxybenzoesäure; Natriumsalzen, wie zum Beispiel Natriumchlorid, Natriumlactat, Natriumcitrat, Natriumacetat, Natriumgluconoat; Hydroxyflavanonen, wie zum Beispiel Eriodictyol, Homoeriodictyol, Hesperetin und deren Natriumsalzen (insbesondere solche wie beschrieben in EP 1 258 200 A2, die bezüglich der darin offenbarten entsprechenden Verbindungen auf dem Wege der Verweisung Bestandteil dieser Anmeldung wird); Hydroxybenzoesäureamiden, wie zum Beispiel 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N-*4-(hydroxy-3-methoxybenzyl)amid, 4-Hydroxybenzoesäure-*N*-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-*N*-2-(4-hydroxy-3-methoxyphenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamid (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, wie zum Beispiel 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon) (insbesondere solche wie beschrieben in WO 2006/106023, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird), 4-Hydroxydihydrochalconen, wie zum Beispiel Phloretin, Davidigenin (insbesondere solche wie beschrieben in US 2008/0227867 A1, die bezüglich der darin offenbarten entsprechenden Verbindungen auf dem Wege der Verweisung Bestandteil dieser Anmeldung wird), Deoxybenzoinen wie zu Beispiel 2-(4-Hydroxyphenyl)-1-(4-hydroxy-3-methoxyphenyl)ethanon (insbesondere solche wie beschrieben in DE 102009002268, die bezüglich der darin offenbarten entsprechenden Verbindungen auf dem Wege der Verweisung Bestandteil dieser Anmeldung wird) und Hydroxyflavanen wie zu Beispiel 3',7-Dihydroxy-4'-methoxyflavan (insbesondere solche wie beschrieben in der US Provisional Application 61/178,667 (Symrise GmbH & Co. KG), welche bezüglich der darin offenbarten entsprechenden Verbindungen auf dem Wege der Verweisung Bestandteil dieser Anmeldung wird.

Speichelfördernden Aroma- und/oder Geschmackstoffe sind bevorzugt trigeminal wirksame Aroma- und/oder Geschmackstoffe, und sind vorzugsweise ausgewählt aus:
- der Gruppe der Wärme verursachenden Stoffe oder Scharfstoffen, bevorzugt ausgewählt aus der Liste bestehend aus: Capsaicinoiden, wie zum Beispiel Capsaicin, Dihydrocapsaicin oder Nonivamid; Gingerolen, wie zum Beispiel Gingerol-6, Gingerol-8, oder Gingerol-10; Gingerdionen, wie zum Beispiel Gingerdion-6, Gingerdion-8 oder Gingerdion-10; Paradolen, wie zum Beispiel Paradol-6, Paradol-8 oder Paradol-10; Dehydrogingerdionen, wie zum Beispiel Dehydrogingerdion-6, Dehydrogingerdion-8 oder Dehydrogingerdion-10; Piperin und Piperinderivaten;
   und/oder
- der Gruppe der als stechend wahrnehmbaren Stoffe, bevorzugt ausgewählt aus der Gruppe bestehend aus: aromatischen Isothiocyanaten, wie zum Beispiel Phenylethylisothiocyanat, Allylisothiocyanat, Cyclopropylisothiocyanat, Butylisothiocyanat, 3-Methylthiopropylisothiocyanat, 4-Hydroxybenzylisothiocyanat, 4-Methoxybenzylisothiocyanat;
   und/oder
- der Gruppe der einen physiologischen Kühleffekt auslösenden Stoffe, bevorzugt ausgewählt aus der Gruppe bestehend aus Menthol, dabei bevorzugt L-Menthol, D-Menthol, racemisches Menthol, Isomenthol, Neoisomenthol, Neomenthol; Menthylethern, dabei bevorzugt (L-Menthoxy)-1,2-propandiol, (L-Menthoxy)-2-methyl-1,2-propandiol, L-Menthyl-methylether; Menthylestern, dabei bevorzugt Menthylformiat, Menthylacetat, Menthylisobutyrat, Menthyllactat, L-Menthyl-L-lactat, L-Menthyl-D-lactat, L-Menthyl-(2-methoxy)acetat, L-Menthyl-(2-methoxyethoxy)acetat, L-Menthylpyroglutamat; Menthylcarbonaten, dabei bevorzugt L-Menthylpropylenglycolcarbonat, L-Menthylethylenglycolcarbonat, L-Menthylglycerincarbonat oder deren Gemische; Halbestern von Mentholen mit einer Dicarbonsäure oder deren Derivaten, dabei bevorzugt Mono-L-Menthylsuccinat, Mono-L-Menthylglutarat, Mono-L-Menthylmalonat, O-L-Menthylbernsteinsäureester-N,N-(dimethyl)amid, O-L-Menthylbernsteinsäureesteramid; Menthancarbonsäureamide, dabei bevorzugt L-Menthancarbonsäure-N-ethylamid [WS3], N^{α}-(L-Menthancarbonyl)glycinethylester [WS5], L-Menthancarbonsäure-N-(4-cyanophenyl)amid, L-Menthancarbonsäure-N-(alkoxyalkyl)amiden, L-Menthancarbonsäure-N-(alkylthioalkyl)amiden (insbesondere solche wie beschrieben in US 2008/0096969, die bezüglich der darin offenbarten entsprechenden Verbindungen auf dem Wege der Verweisung Bestandteil dieser Anmeldung wird); (L-Menthancarbonyl)aminosäurealkylamiden (insbesondere solche wie beschrieben in WO 2007/138031, die bezüglich der darin offenbarten entsprechenden Verbindungen auf dem Wege der Verweisung Bestandteil dieser Anmeldung wird); Menthon und Menthonderivaten, dabei bevorzugt L-Menthonglycerinketal; 2,3-Dimethyl-2-(2-propyl)-butansäurederivaten, dabei bevorzugt 2,3-Dimethyl-2-(2-propyl)-butansäure-N-methylamid [WS23]), Isopulegol und seine Ester (L-(-)-Isopulegol, L-(-)-Isopulegolacetat; Menthanderivaten, dabei bevorzugt p-Menthan-3,8-diol; Cubebol und synthetischen und natürliche Mischungen, enthaltend Cubebol; Pyrrolidonderivaten von Cycloalkyldionderivaten, dabei bevorzugt 3-Methyl-2(1-pyrrolidinyl)-2-cyclopenten-1-on) und Tetrahydropyrimidin-2-onen, dabei bevorzugt Icilin oder verwandte Verbindungen (insbesondere solche wie beschrieben in WO 2004/026840, die bezüglich der darin offenbarten entsprechenden Verbindungen auf dem Wege der Verweisung Bestandteil dieser Anmeldung wird),
   und/oder
- der Gruppe der im Mundraum als kribbelnd wahrnehmbaren Alkamide, vorzugsweise ausgewählt aus der Gruppe bestehend aus 2E,4E-Decadiensäure-N-isobutylamid (trans-Pellitorin) (insbesondere wie beschrieben in WO 2004/043906, die bezüglich der darin offenbarten entsprechenden Verbindungen auf dem Wege der Verweisung Bestandteil dieser Anmeldung wird); 2E,4Z- Decadiensäure-N-isobutylamid (cis-Pellitorin) (insbesondere wie beschrieben in WO 2004/000787, die bezüglich der darin offenbarten entsprechenden Verbindungen auf dem Wege der Verweisung Bestandteil dieser Anmeldung wird); 2Z,4Z- Decadiensäure-N-isobutylamid; 2Z,4E-Decadiensäure-N-isobutylamid; 2E,4E-Decadiensäure-N-([2S]-2-methylbutyl)amid; 2E,4E-Decadiensäure-N-([2S]-2-methylbutyl)amid; 2E,4E-Decadiensäure-N-([2R]-2-methylbutylamid); 2E,4Z-Decadiensäure-N-(2-methylbutyl)amid; 2E,4E-Decadiensäure-N-piperid (Achilleamid); 2E,4E-Decadiensäure-N-piperid (Sarmentin); 2E-Decensäure-N-isobutylamid; 3E-Decensäure-N-isobutylamid; 3E-Nonensäure-N-isobutylamid; 2E,6Z,8E-Decatriensäure-N-isobutylamid (Spilanthol); 2E,6Z,8E-Decatriensäure-N-([2S]-2-methylbutyl)amid (Homospilanthol); 2E,6Z,8E-Decatriensäure-N-([2R]-2-methylbutyl)amid; 2E-Decen-4-insäure-N-isobutylamid; 2Z-Decen-4-insäure-N-isobutylamid; 2E,6Z,8E,10E-Dodecatetraensäure-N-(2-methylpropyl)amid (alpha-Sanshool); 2E,6Z,8E,10E-Dodecatetraensäure-N-(2-hydroxy-2-methylpropyl)amid (alpha-Hydroxysanshool); 2E,6E,8E,10E-Dodecatetraensäure-N-(2-hydroxy-2-methylpropyl)amid (gamma-Hydroxysanshool); 2E,4E,8Z,10E,12E-Tetradecapentaensäure-N-(2-hydroxy-2-methylpropyl)amid (gamma-Hydroxysanshool); 2E,4E,8E,10E,12E-Tetradecapentaensäure-N-(2-hydroxy-2-methylpropyl)amid (gamma-Hydroxyisosanshool); 2E,4E,8Z,10E,12E-Tetradecapentaensäure-N-(2-methyl-2-propenyl)amid (gamma-Dehydrosanshool); 2E,4E,8Z,10E,12E-Tetradecapentaensäure-N-(2-methylpropyl)amid (gamma-Sanshool); 2E,4E,8Z,11Z-Tetradecatetraensäure-N-(2-hydroxy-2-methylpropyl)amid (Bungeanool); 2E,4E,8Z,11 E-Tetradecatetraensäure-N-(2-hydroxy-2-methylpropyl)amid (Isobungeanool); 2E,4E,8Z-Tetradecatriensäure-N-(2-hydroxy-2-methylpropyl)amid (Dihydrobungeanool) und 2E,4E -Tetradecadiensäure-N-(2-hydroxy-2-methylpropyl)amid (Tetrahydrobungeanool).

In einer weiter bevorzugten Ausgestaltung betrifft die vorliegende Erfindung eine oral konsumierbare Zubereitung, zusätzlich enthaltend
(ii) einen oder mehrere weitere bittermaskierende Aroma- und/oder Geschmackstoffe, ausgewählt aus der Gruppe bestehend aus
   - Natriumsalzen, dabei vorzugsweise Natriumchlorid, Natriumlactat, Natriumcitrat, Natriumacetat, Natriumgluconoat,
   - Hydroxyflavanonen, dabei vorzugsweise Eriodictyol, Homoeriodictyol,
   - Hesperetin und dessen Natriumsalzen,
   - Hydroxybenzoesäureamiden, dabei vorzugsweise 2,4-Dihydroxybenzoesäurevanillylamid, 2,4-Dihydroxybenzoesäure-*N*-(4-hydroxy-3-methoxybenzyl)amid-Mono-natriumsalz,
   - Hydroxydeoxybenzoinen, dabei vorzugsweise 2-(4-Hydroxy-3-methoxyphenyl)-1-(2,4,6-trihydroxyphenyl)ethanon,
   - Hydroxyphenylalkandionen, dabei vorzugsweise Gingerdion-[2] und Gingerdion-[3],
   - Diacetyltrimeren,
   - gamma-Aminobuttersäure,
   - Divanillinen,
   - 4-Hydroxydihydrochalconen, dabei vorzugsweise Phloretin,
   - Deoxybenzoinen, dabei vorzugsweise 2-(4-Hydroxyphenyl)-1-(4-hydroxy-3-methoxyphenyl)ethanon, und
   - Hydroxyflavanen, dabei vorzugsweise 3',7-Dihydroxy-4'-methoxyflavan, und gegebenenfalls
(iv) einen oder mehrere speichelfördernde Aroma- und/oder Geschmackstoffe, bevorzugt ausgewählt aus der Gruppe, bestehend aus 2E,4E-Decadiensäure-N-isobutylamid (Pellitorin), 2E,4Z-Decadiensäure-N-isobutylamid (cis-Pellitorin), 2Z,4Z-Decadiensäure-N-isobutylamid, 2Z,4E-Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (alpha-Sanshool) und 2E,4E,8Z,11Z-Tetradecatetraensäure-N-(2-hydroxy-2-methylpropyl)amid (Bungeanool).

Ein weiterer Gegenstand der vorliegenden Erfindung ist eine Aromakomposition zum Maskieren, Verringern oder Unterdrücken eines bitteren, sauren und/oder adstringierenden Geschmackseindrucks, insbesondere zur Anwendung in einer oral konsumierbaren Zubereitung, vorzugsweise in einem oral konsumierbaren Lebensmittel, umfassend
(i-a) Rubusosid in einer Menge im Bereich von 0,1 bis 50 Gew.-%, bevorzugt im Bereich von 0,5 bis 30 Gew.-%, besonders bevorzugt im Bereich von 1 bis 25 Gew.-%,
(i-b) eine oder mehrere phenolische Verbindungen, vorzugsweise ein oder mehrere Polyphenole, aus *Rubus suavissimus* in einer Gesamtmenge im Bereich von 0,1 Gew.-% bis 25 Gew.-%, bevorzugt im Bereich von 0,5 Gew.-% bis 15 Gew.-%, weiter bevorzugt im Bereich von 1 Gew.-% bis 10 Gew.-%, besonders bevorzugt im Bereich von 2 Gew.-% bis 8 Gew.-%,
   (ii) einen oder mehrere weitere bittermaskierende Aroma- und/oder Geschmackstoffe, ausgewählt aus der Gruppe bestehend aus Eriodictyol, Homoeriodictyol, Hesperetin und deren Natriumsalzen, gamma-Aminobuttersäure, Divanillin, Phloretin, und 3',7-Dihydroxy-4'-methoxyflavan,
   (iii) einen oder mehrere Schlechtgerüche unterdrückende Aromastoffe, ausgewählt aus der Gruppe bestehend aus Vanillin, Ethylvanillin, 4-Methoxy-2-hydroxybenzaldehyd, Ethylvanillinisobutyrat (= 3-Ethoxy-4-isobutyryloxybenzaldehyd), Furaneol^{®} (2,5-Dimethyl-4-hydroxy-3(2H)-furanon) und dessen Abkömmlinge, dabei vorzugsweise Homofuraneol, (= 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und dessen Abkömmlinge, dabei vorzugsweise Ethylmaltol, Cumarin und dessen Abkömmlinge, gamma-Lactone (dabei vorzugsweise gamma-Undecalacton, gamma-Nonalacton), delta-Lactone (dabei vorzugsweise 4-Methyldeltalacton, Massoilacton, Deltadecalacton, Tuberolacton, delta-Dodecalacton, delta-Tetradecalacton, delta-Hexadecalacton, delta-Octadecalacton), Methylsorbat, Diacetyl, 4-Hydroxy-2(oder 5)-ethyl-5(oder-2)-methyl-3(2H)furanon, 2-Hydroxy-3-methyl-2-cyclopentenone, 3-Hydroxy-4,5-dimethyl-2(5H)-furanon, Fruchtester und Fruchtlactone (dabei vorzugsweise Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd,
   (iv) gegebenenfalls einen oder mehrere speichelfördernde Aroma- und/oder Geschmackstoffe, ausgewählt aus der Gruppe, bestehend aus 2E,4E-Decadiensäure-N-isobutylamid (Pellitorin), 2E,4Z-Decadiensäure-N-isobutylamid (cis-Pellitorin), 2Z,4Z-Decadiensäure-N-isobutylamid, 2Z,4E-Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (alpha-Sanshool) und 2E,4E,8Z,11Z-Tetradecatetraensäure-N-(2-hydroxy-2-methylpropyl)amid (Bungeanool),
   (v) gegebenenfalls einen oder mehrere Hilfs- oder Trägerstoffe, ausgewählt aus der Gruppe bestehend aus Ethanol, 1,2-Propylenglycol, Pflanzenöltriglyceride, Triacetin und/oder Glycerin, bevorzugt in einer Menge im Bereich von 1 bis 75 Gew.-%, bevorzugt im Bereich von 5 bis 50 Gew.-%, besonders bevorzugt im Bereich von 10 bis 40 Gew.-%,
      und
   (vi) einen, zwei, drei, vier, fünf, sechs, sieben, acht, neun, zehn oder mehr flüchtige Aromastoffe, wobei die Schlechtgerüche unterdrückende Aromastoffe des Bestandteils (iii) von den flüchtigen Aromastoffen des Bestandteils (vi) ausgenommen sind,
wobei sich die Mengenangaben jeweils auf das Gesamtgewicht der Aromakomposition beziehen.

Unter einem flüchtigen Aromastoff wird im Rahmen der vorliegenden Erfindung eine sensorisch wirksame Komponente mit einem Dampfdruck von größer oder gleich 0,01 Pa bei 25°C, insbesondere mit einem Dampfdruck von größer oder gleich 0,025 Pa bei 25°C, verstanden. Ein Großteil der flüchtigen Aromastoffe weist einen Dampfdruck von größer oder gleich 1 Pa bei 25°C auf, so dass im Speziellen solche Stoffe als flüchtige Aromastoffe im Sinne der vorliegenden Erfindung angesehen werden.

Die erfindungsgemäßen Aromakompositionen haben sich als besonders wirksam gezeigt zum Maskieren, Verringern oder Unterdrücken eines bitteren, sauren und/oder adstringierenden Geschmackseindrucks.

Vorzugsweise wird dabei ein Extrakt aus *Rubus suavissimus* eingesetzt, welcher die genannten Bestandteile (i-a) und (i-b) umfasst, bevorzugt in einer der oben genannten Ausgestaltungen.

Besonders wirksam ist die Kombination von Rubusosid oder einer Rubusosid enthaltenden Mischung, vorzugsweise in einer der als bevorzugt gekennzeichneten Ausgestaltungen, mit weiteren bittermaskierenden und/oder speichelfördernden Aroma- und/oder Geschmackstoffen. So ist die Kombination von Rubusosid, vorzugsweise in Form, d.h. als Bestandteil eines *Rubus suavissimus* -Extraktes, mit Homoeriodictyol oder Hesperetin sowie optional mit Pellitorin, dabei vorzugsweise trans-Pellitorin, besonders effektiv. Insoweit sind solche Mischungen, Aromakompositionen und oralen Zubereitungen im Rahmen der vorliegenden Erfindung besonders bevorzugt.

Insoweit sind solche erfindungsgemäß einzusetzenden Mischungen, erfindungsgemäße oder erfindungsgemäß einzusetzende Aromakompositionen und erfindungsgemäße oral konsumierbare Zubereitungen besonders bevorzugt, die Homoeriodictyol oder Hesperetin enthalten, solche, die Homoeriodictyol und Pellitorin bzw. Hesperetin und Pellitorin enthalten und solche, die Homoeriodictyol, Hesperetin und Pellitorin enthalten.

Dabei kann die Verringerung des als unangenehm empfundenen bitteren, sauren und/oder adstringierenden Eindruckes durch Verändern, Maskieren oder Vermindern entstehen. Zur Erfindung gehört auch ein entsprechendes Verringern oder Unterdrücken des entsprechenden (Geschmacks-)Eindruckes auch dann, wenn dieser von einer Verbindung erst in Kombination mit anderen Verbindungen (in einem Stoffgemisch) erzeugt wird. Unter Verringern im Sinne der Erfindung fällt auch das Abschwächen eines bitteren und adstringierenden Nachgeschmacks.

Für die (ii) bittermaskierende Aroma- und/oder Geschmackstoffe sind ebenfalls zum Teil natürliche Quellen, vornehmlich Pflanzenextrakte, bekannt und anwendbar. Für Eriodictyol und Homoeriodictyol oder deren Natriumsalze können z.B. Extrakte aus *Eriodictyon ssp,* bevorzugt *Eriodictyon californicum* oder *E. angustifolium,* für Eriodictyol und Hesperetin Honigbuschtee-Extrakte (*Cyclopia ssp.*) oder hydrolisierte Extrakte aus den Früchten oder Fruchtschalen von *Citrus*-Spezies, und für Phloretin Extrakte aus *Malus ssp.,* vornehmlich aus Apfelbaumprodukten, z.B. Apfelrindenextrakt oder angereicherter Apfelpolyphenolextrakt, vorzugsweise mit Glycosidasen enzymatisch oder mit Säure bzw. saurem Ionentauscher behandelter Apfelrindenextrakt oder angereicherter Apfelpolyphenolextrakt im Sinne der Erfindung verwendet werden.

Bevorzugte Schlechtgerüche (iii) unterdrückende Aromastoffe sind Vanillin, Ethylvanillin, 4-Methoxy-2-hydroxybenzaldehyd, Ethylvanillinisobutyrat (= 3-Ethoxy-4-isobutyryloxybenzaldehyd), Furaneol^{®} (= 2,5-Dimethyl-4-hydroxy-3(2H)-furanon) und dessen Abkömmlinge, dabei vorzugsweise Homofuraneol (= 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und dessen Abkömmlinge (dabei vorzugsweise Ethylmaltol), Cumarin und dessen Abkömmlinge, gamma-Lactone (dabei vorzugsweise gamma-Undecalacton, gamma-Nonalacton), delta-Lactone (dabei vorzugsweise 4-Methyldeltalacton, Massoilacton, Deltadecalacton, Tuberolacton, delta-Dodecalacton, delta-Tetradecalacton, delta-Hexadecalacton, delta-Octadecalacton), Methylsorbat, Diacetyl, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (dabei vorzugsweise Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

Für die (iv) speichelfördernden und trigeminal wirksamen Aroma- und/oder Geschmackstoffe sind zum Teil natürliche Quellen, vornehmlich Pflanzenextrakte bekannt und im Sinne der Erfindung einsetzbar. Für bevorzugte speichelfördernden und trigeminal wirksamen Alkamide sind pflanzliche Extrakte wie beispielsweise Alkamide enthaltender Pfefferextrakt (*Piper ssp.,* insbesondere *P. nigrum, P. hispidum, P. tuberculatum, P. longum, P. arboreum, P. futokadsura, P. guineense, P. sarmentosum* oder *Piper nigrum, Var. muntok, P. aff. pedicellatum),* Extrakte aus Zahnwehgras (englisch "toothache grass", *Ctenium aromaticum*), Extrakte aus Estragon (*Artemisia dracunculus*), Bertramwurzel-Extrakte (*Anacyclus ssp.,* insbesondere *Anacylcus pyrethrum* L.), Sonnenhutextrakte (*Echinaceae ssp.,* z.B. *E. angustifolia*), Extrakte aus Szechuan-Pfeffer (*Zanthoxylum ssp.,* insbesondere *Zanthoxylum piperitum,* Z. *clavaherculin, Z. bungeanum, Z. zanthoxyloides*), Spilanthes- oder Parakresseextrakte (*Spilanthes ssp.,* insbesondere *Spilanthes acmella*), Extrakte aus *Acmella ssp.* (z.B. *A.ciliata*), Extrakte aus *Achillea ssp.* (z.B. *Achillea wilsoniana*), Extrakte aus Fagara-Arten (*Fagara zanthoxyloides*), Extrakte aus *Heliopsis ssp.* (z.B. *H. longipes*), *E*xtrakte aus *Cissampelos glaberrima,* Extrakte aus *Dinosperma erythrococca,* Extrakte aus der Rinde von *Esenbeckia alata* und Extrakte aus *Stauranthus perforatus* besonders geeignet.

Trigeminal wirksam im Sinne des vorliegenden Textes sind solche Verbindungen, die in der Mundhöhle einen wärmenden, scharfen, stechenden, kühlenden und/oder kribbelnden Eindruck vermitteln können.

Die pflanzlichen Extrakte können aus den entsprechenden frischen oder getrockneten Pflanzen oder Pflanzenteilen, insbesondere aber aus weißen, grünen oder schwarzen Pfefferkörnern (*P. nigrum*), Stangenpfeffer (P. *longum*), Sonnenhutwurzeln, Bertramswurzel, Szechuan-Peffer, Pflanzenteilen der anderen *Zanthoxylum-Arten,* Pflanzenteilen der *Spilanthes-* oder Acmella-Arten, Pflanzenteilen der *Fagara-* oder Heliopsis-Arten, Pflanzenteilen der *Eriodictyon ssp.* oder *Malus ssp.* gewonnen werden. Üblicherweise werden die getrockneten Pflanzenteile (z.B. frische oder getrocknete Wurzeln, Früchte, Samen, Rinde, Holz, Stängel, Blätter oder Blüten[teile]), vorzugsweise in zerkleinerter Form, mit einem für Nahrungs- und Genussmittel geeigneten Lösungsmittel bei Temperaturen von 0°C bis zum Siedepunkt des jeweiligen Lösungsmittels oder Lösungsmittelgemisches extrahiert, anschließend filtriert und das Filtrat vollständig oder teilweise eingeengt, vorzugsweise durch Destillation, Gefrier- oder Sprühtrocknung. Der so erhaltene Rohextrakt kann dann noch weiter aufgearbeitet werden, beispielsweise enzymatisch behandelt werden (z.B. mit Glycosidasen zur Ausbeutesteigerung an nicht-zuckerhaltigen Molekülen), mit Säure (z.B. unter Druck), mit sauren Ionentauschern oder mit Wasserdampf behandelt werden, meist bei Drücken von 0,01 mbar bis 100 bar, vorzugsweise bei 1 mbar bis 20 bar, und/oder in einem für Nahrungs- und Genussmittel geeigneten Lösungsmittel aufgenommen werden.

Insbesondere für Nahrungs- und Genussmittel zur Extraktion geeignete Lösungsmittel sind Wasser, Ethanol, Methanol, Propylenglycol, Glycerin, Aceton, Dichlormethan, Essigsäureethylester, Diethylether, Hexan, Heptan, Triacetin, pflanzliche Öle oder Fette, superkritisches Kohlendioxid und deren Gemische.

Bevorzugte Hilfs- oder Trägerstoffe sind Maltodextrin, Stärke, natürliche oder künstliche Polysaccharide und/oder Pflanzengummen wie modifizierte Stärken oder Gummi Arabicum, für die Aromakompositionen zugelassene Lösungsmittel wie z.B. Ethanol, 1,2-Propylenglycol, Wasser, Glycerin, Triacetin, Pflanzenöltriglyceride, färbende Mittel, z.B. zugelassene Lebensmittelfarbstoffe, färbende Pflanzenextrakte, Stabilisitoren, Konservierungsstoffe, Antioxidantien, viskositätsbeeinflussende Stoffe.

In einer bevorzugten erfindungsgemäßen bzw. erfindungsgemäß zu verwendenden Aromakomposition bzw. einer erfindungsgemäßen oral konsumierbaren Zubereitung sind die Komponenten der Gruppe (i-a) zu den Komponenten der Gruppe (ii) in einem Verhältnis von 1 : 100 bis 100 : 1 enthalten, weiter bevorzugt 1 : 10 bis 10 : 1, besonders bevorzugt 1 : 5 bis 5 : 1, jeweils bezogen auf das Gewichtsverhältnis der beiden Komponenten.

Sofern vorhanden, werden die Komponenten der Gruppe (iii) erfindungsgemäß bevorzugt in einer bevorzugten erfindungsgemäßen bzw. erfindungsgemäß zu verwendenden Aromakomposition bzw. einer erfindungsgemäßen oral konsumierbaren Zubereitung in einem Verhältnis von 1 : 1000000 bis 1 : 1 enthalten, weiter bevorzugt 1 : 10000 bis 1 : 10, besonders bevorzugt 1 : 2000 bis 1 : 50, eingesetzt, wobei das Verhältnis das Gewichtsverhältnis des Gewichts der Komponenten der Gruppe (iii) zu der Summe der Gewichte der Komponenten der Gruppe (i-a) und (ii) darstellt.

Sofern vorhanden, werden die Komponenten der Gruppe (iv) erfindungsgemäß bevorzugt in einer bevorzugten erfindungsgemäßen bzw. erfindungsgemäß zu verwendenden Aromakomposition bzw. einer erfindungsgemäßen oral konsumierbaren Zubereitung in einem Verhältnis von 10 : 1 bis 1 : 10 eingesetzt, wobei das Verhältnis das Gewichtsverhältnis des Gewichts der Komponenten der Gruppe (iv) zu der Summe der Gewichte der Komponenten der Gruppe (i-a), (ii) und (iii) darstellt.

Sofern vorhanden, werden in einer bevorzugten erfindungsgemäßen bzw. erfindungsgemäß zu verwendenden Aromakomposition bzw. einer erfindungsgemäßen oral konsumierbaren Zubereitung die Komponenten der Gruppe (v) in einem Verhältnis von 1 : 1000 bis 1000 : 1, bevorzugt 1 : 100 bis 100 : 1 eingesetzt, wobei das Verhältnis das Gewichtverhältnis der Komponenten der Gruppe (v) zu der Summe der Gewichte der Komponenten der Gruppe (i-a), (ii), (iii) und (iv) darstellt.

Eine besonders bevorzugte erfindungsgemäße bzw. erfindungsgemäß einzusetzende Aromakomposition umfasst ferner zumindest eine Komponente zum Verstärken eines süßen, salzigen, gegebenenfalls leicht sauren und/oder Umami-Geschmackseindrucks. Es werden somit vorzugsweise die erfindungsgemäß einzusetzenden bzw. erfindungsgemäßen Aromakompositionen in Kombination mit zumindest einer (weiteren) zur Verstärkung eines angenehmen Geschmackseindrucks (süß, salzig, Umami gegebenenfalls leicht sauer) geeigneten Substanz verwendet. Hierbei können bevorzugt salzig schmeckende Verbindungen / salzverstärkende Verbindungen wie in der WO 2007/045566 offenbart, die hinsichtlich dieser Verbindungen auf dem Wege der Verweisung Bestandteil dieser Anmeldung wird, Hesperitin wie in der WO 2007/014879 offenbart, die hinsichtlich dieser Verbindungen auf dem Wege der Verweisung Bestandteil dieser Anmeldung wird, oder Propenylphenylglycoside (Chavicolglycoside) wie in US 2008/0220140 offenbart, Phyllodulcin oder Hydrangea-Extrakte wie in der US Provisional Application 61/237,866 (Symrise GmbH & Co. KG) beschrieben, welche bezüglich der darin offenbarten Verbindungen und Extrakte auf dem Wege der Verweisung Bestandteil dieser Anmeldung wird, Mondia-Extrakte wie in der DE 102009046126 (Symrise GmbH & Co. KG) beschrieben, welche bezüglich der darin offenbarten Verbindungen und Extrakte auf dem Wege der Verweisung Bestandteil dieser Anmeldung wird, sowie Umami - Verbindungen wie in WO 2008/046895 und US 2008/0292763 beschrieben, die hinsichtlich dieser Verbindungen auf dem Wege der Verweisung Bestandteil dieser Anmeldung werden.

In einer bevorzugten Ausgestaltung, umfasst eine bevorzugte erfindungsgemäße bzw. erfindungsgemäß einzusetzende Aromakomposition zusätzlich wenigstens eine Verbindung, die bittere, saure und adstringierende Eindrücke im Mundraum erzeugen kann, wobei diese Eindrücke aufgrund der enthaltenen Komponenten der Gruppen (i-a) und (ii) verringert und bevorzugt nicht wahrnehmbar sind.

Verbindungen, die bittere, saure und/oder adstringierende sowie gegebenenfalls zusätzlich pappige, staubige, trockene, mehlige, ranzige oder metallische Eindrücke im Mundraum erzeugen können, sind beispielsweise: organische oder anorganische Säuerungsmittel (dabei insbesondere Ascorbinsäure, Benzoesäure, Gallussäure, Glucuronsäure, Adipinsäure, Glutarsäure, Malonsäure, Bernsteinsäure, Äpfelsäure, Essigsäure, Citronensäure, Weinsäure, Phosphorsäure, Pyrophosphorsäure), Xanthinalkaloide, Xanthine (dabei insbesondere Coffein, Theobromin, Theophyllin und Methylxanthine), Alkaloide (dabei insbesondere Chinin, Brucin, Strychnin, Nicotin), phenolische Glycoside (dabei insbesondere Salicin, Arbutin), Flavonoidglycoside (z.B. Neohespereidin, Hesperidin, Naringin, Quercitrin, Rutin, Hyperoside, Isoquercitrin, Avicularin), Isoflavonoide oder deren Glycoside (dabei insbesondere Daidzin, Genistin und deren Acyl- bzw. Malonylester), bitter schmeckende Chalcone oder Chalconglycoside (dabei insbesondere Phloridzin, Phloretin-2-O'-xyloglucosid), hydrolisierbare Tannine (Gallus- oder Ellagsäureester von Kohlenhydraten, z.B. Pentagalloylglucose), nichthydrolisierbare Tannine (gegebenenfalls galloylierte Catechine oder Epicatechine und deren Oligomeren, z.B. Proanthocyanidine oder Procyanidine, Thearubigenin), Flavone (dabei insbesondere Quercetin, Taxifolin, Myricetin), Phenole wie Salicin, Polyphenole (dabei insbesondere Hydroxyzimtsäuren und deren Ester wie gamma-Oryzanol, Kaffeesäure oder deren Ester, dabei insbesondere Chlorogensäure, Neochlorogensäure, Cryptochlorogensäure, Chlorogensäurelactone), terpenoide Bitterstoffe (dabei insbesondere Limonoide wie Limonin oder Nomilin aus Zitrusfrüchten, Lupolone, Humolone und Isoalphasäuren aus Hopfen, Iridoide, Secoiridoide), Triterpenglycoside wie P57A und verwandte Wirkstoffe aus *Hoodia gordonii,* Absinthin aus Wermut, Amarogentin aus Enzian, metallische Salze (insbesondere Kalium-, Magnesium- und Calciumsalze, Kaliumchlorid, Kaliumgluconat, Kaliumcarbonat, Kaliumsulfat, Kaliumlactat, Kaliumglutamat, Kaliumsuccinat, Kaliummalat, Natriumsulfat, Magnesiumsulfat), pharmazeutische Wirkstoffe (z.B. Fluorchinolon-Antibiotika, Paracetamol, Aspirin, beta-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthotensäure), Denatoniumbenzoat, Sucraloseoctaacetat, Eisensalze, Aluminiumsalze, Zinksalze, Harnstoff, ungesättigte Fettsäuren, insbesondere ungesättigte Fettsäuren in Emulsionen, bitter schmeckende Aminosäuren (z.B. Leucin, Isoleucin, Valin, Tryptophan, Prolin, Histidin, Tyrosin, Lysin oder Phenylalanin) und bitter schmeckende Peptide (insbesondere Peptide mit einer Aminosäure aus der Gruppe Leucin, Isoleucin, Valin, Tryptophan, Prolin oder Phenylalanin am N- oder C-Terminus) oder Cyclodipeptide (vor allem mit Leucin, Isoleucin, Valin, Tryptophan, Prolin oder Phenylalanin gebildete Cyclodipeptide), Produkte aus der Maillard-Reaktion, Lignane.

Bevorzugte Verbindungen, die bittere, saure und/oder adstringierende sowie gegebenenfalls zusätzlich pappige, staubige, trockene, mehlige, ranzige oder metallische Eindrücke im Mundraum erzeugen können sind erfindungsgemäß ausgewählt aus der Gruppe bestehend aus Ascorbinsäure, Benzoesäure, Gallussäure, Glucuronsäure, Adipinsäure, Glutarsäure, Malonsäure, Bernsteinsäure, Äpfelsäure, Essigsäure, Citronensäure, Weinsäure, Phosphorsäure, Coffein, Theobromin und Theophyllin, Chinin, Salicin, Arbutin, Neohesperidin, Naringin, Quercitrin, Rutin, Daidzin, Genistin und deren Acyl- bzw. Malonylester, Phloridzin, Gallus- oder Ellagsäureester von Kohlenhydraten (z.B. Pentagalloylglucose), gegebenenfalls galloylierte Catechine oder Epicatechine, Proanthocyanidine oder Procyanidine, Thearubigenin, Quercetin, Taxifolin, Myricetin, gamma-Oryzanol, Kaffeesäure oder deren Ester (dabei insbesondere Chlorogensäure und deren Isomere), Limonoide wie Limonin oder Nomilin aus Zitrusfrüchten, Lupolone und Humolone aus Hopfen, Triterpenglycoside wie P57A und verwandte Wirkstoffe aus *Hoodia gordonii,* Absinthin aus Wermut, Amarogentin aus Enzian, metallische Salze (insbesondere Kalium-, Magnesium- und Calciumsalze, Kaliumchlorid, Kaliumgluconat, Kaliumcarbonat, Kaliumsulfat, Kaliumlactat, Kaliumglutamat, Kaliumsuccinat, Kaliummalat, Natriumsulfat, Magnesiumsulfat) und pharmazeutische Wirkstoffe (z.B. Fluorchinolon-Antibiotika, Paracetamol, Aspirin, beta-Lactam-Antibiotika, Ambroxol, Propylthiouracil [PROP], Guaifenesin).

Besonders bevorzugt sind dabei Stoffe, die sauer und adstringierend schmecken; diese sind vorzugsweise gewählt aus der Gruppe bestehend aus Ascorbinsäure, Benzoesäure, Gallussäure, Glucuronsäure, Adipinsäure, Glutarsäure, Malonsäure, Bernsteinsäure, Äpfelsäure, Essigsäure, Citronensäure, Weinsäure, Phosphorsäure, Quercitrin, Rutin, Gallus- oder Ellagsäureester von Kohlenhydraten (z.B. Pentagalloylglucose), gegebenenfalls galloylierte Catechine oder Epicatechine, Proanthocyanidine oder Procyanidine, Thearubigenin, gamma-Oryzanol, Kaffeesäure oder deren Ester (dabei vorzugsweise Chlorogensäure und deren Isomere).

Verbindungen, die einen bitteren, sauren und adstringierenden sowie gegebenenfalls pappigen, kalkigen, staubigen, trockenen, mehligen, ranzigen oder metallischen Nachgeschmack im Mundraum erzeugen können, können Aroma- oder Geschmackstoffe mit einem nicht unangenehmen Primärgeschmack (beispielsweise süß, salzig, würzig) und/oder -geruch sein und z.B. zur Gruppe der Süßstoffe, Zuckeraustauschstoffe oder der Aromastoffe gehören. Beipielsweise seien genannt: Kaliumsalze (insbesondere Kaliumchlorid, Kaliumgluconat, Kaliumcarbonat, Kaliumsulfat, Kaliumlactat, Kaliumglutamat, Kaliumsuccinat, Kaliummalat), Aspartam, Neotam, Alitam, Superaspartam, Saccharin, Sucralose, Tagatose, Monellin, Steviosid, Rebaudiosid A, Hernandulcin, Thaumatin, Miraculin, Neohesperedindihydrochalcon, Naringindihydrochalkon, Glycyrrhizin, Glycyrrhetinsäure oder deren Derivate, Cyclamat oder die pharmazeutisch akzeptablen Salze der vorgenannten Verbindungen.

Wie bereits weiter oben angedeutet wurde überraschenderweise gefunden, dass die erfindungsgemäßen Mischungen und die erfindungsgemäßen bzw. erfindungsgemäß einzusetzenden Aromakompositionen einen bitteren, sauren und gleichzeitig adstringierenden Eindruck im Mundraum, der insbesondere durch die genannten Verbindungen hervorgerufen wird, in einer Vielzahl von oral konsumierbaren Zubereitungen (besonders Beispiele sind tee-, insbesondere grünteebasierte Getränke, Sojaprodukte, insbesondere Sojamilchprodukte, fermentierte Milchprodukte, insbesondere fettarme Joghurt-Produkte, kakaohaltige Produkte, insbesondere Schokolade) maskieren, reduzieren oder sogar vollständig unterdrücken können.

Besonders positiv ist bei der Verwendung von erfindungsgemäß einzusetzenden Rubusosid enthaltenden Mischungen (wie oben definiert), insbesondere bei der Verwendung der erfindungsgemäß bevorzugt einzusetzenden *Rubus suavissimus-*Extrakte, die gleichzeitige Verbesserung des Gesamt-Aromaeindrucks der oral konsumierbaren Zubereitung, wie in den Anwendungsbeispielen exemplarisch dargestellt. Gleiches gilt für erfindungsgemäße bzw. erfindungsgemäß einzusetzende Aromakompositionen sowie für eine erfindungsgemäße oral konsumierbare Zubereitung, insbesondere in einer der bevorzugten Ausgestaltungen.

Besonders von Nutzen und Vorteil ist die Verwendung in den oben genannten oral konsumierbaren Zubereitungen, die einen zu hohen sensorischen Säureeindruck haben, der durch die natürliche Konzentration an Fruchtsäuren, fermentativ gebildete Säuren oder aus Stabilitätsgründen, insbesondere mikrobiologischen Stabilitätsgründen, zugesetzten Säuren bedingt ist und wobei der pH-Wert aus technologischen Gründen nicht verändert werden kann oder darf.

Eine erfindungsgemäße oral konsumierbare Zubereitung ist vorzugsweise eine pharmazeutische oder eine der Ernährung, der Mundpflege oder dem Genuss dienenden Zubereitung ist, welche bevorzugt ausgewählt ist aus der Gruppe bestehen aus: fermentierten Milchprodukten, dabei vorzugsweise Sauermilch, Joghurt, Kefir, Sauerrahm, Quark, Käse, fermentierten Sojaprodukten, dabei vorzugsweise Tempeh, Tofu, Soja Joghurt, fermentierten Getreideprodukten, fermentierten Fleischprodukten, unfermentierten oder fermentierten Obst- und Gemüsesäften, anderen Gemüse- und Fruchtzubereitungen und daraus hergestellten Produkten, wobei die genannten Produkte vorzugsweise einen Säuregehalt aufweisen bzw. beibehalten müssen, um stabil, insbesondere mikrobiologisch stabil, zu bleiben.

Entsprechend dem Vorgesagten eignen sich die erfindungsgemäß zu verwendenden Mischungen sowie die erfindungsgemäß einzusetzenden bzw. erfindungsgemäßen Aromakompositionen insbesondere zur Einarbeitung und als Bestandteil von oral konsumierbaren Zubereitungen, welche Verbindungen enthalten, die einen bitteren, sauren und adstringierenden sowie gegebenenfalls pappigen, kalkigen, staubigen, trockenen, mehligen, ranzigen oder metallischen (Nach-)Geschmack im Mundraum erzeugen können. Hierbei wird insbesondere auf die vorstehende Aufzählung von Beispielen dieser Verbindungen verwiesen. Die erfindungsgemäß zu verwendenden Mischungen sowie die erfindungsgemäß einzusetzenden bzw. erfindungsgemäßen Aromakompositionen eignen sich also insbesondere zur Kombination mit
(a) oral konsumierbaren Zubereitungen, die bitter, sauer und/oder adstringierend sowie gegebenenfalls pappig, staubig, trocken, mehlig, ranzig und/oder metallisch schmecken und/oder
(b) oral konsumierbaren Zubereitungen, die einen bitteren, sauren und gleichzeitig adstringierenden, pappigen, staubigen, trockenen, mehligen, ranzigen oder metallischen Nachgeschmack haben.

Die vorgenannten unangenehm schmeckenden oral konsumierbaren Zubereitungen können noch weitere, in der Regel nicht unangenehme Geschmacks- und/oder Geruchsqualitäten besitzen. Als weitere, im Sinne der vorliegenden Erfindung nicht unangenehme Geschmacksqualitäten sind z.B. die Eindrücke würzig, umami, süß, salzig und wenig sauer zu nennen.

Dementsprechend betrifft in einem weiteren Aspekt die vorliegende Erfindung eine oral konsumierbare Zubereitung, enthaltend eine erfindungsgemäße bzw. eine erfindungsgemäß einzusetzende Aromakomposition bzw. eine erfindungsgemäß einzusetzende Mischung.

Bevorzugt ist eine solche oral konsumierbare Zubereitung eine pharmazeutische Zubereitung, unmittelbar zur Ernährung oder zum Genuss bestimmt und/oder der Mundpflege dienende Zubereitung.

Bevorzugt sind erfindungsgemäße oral konsumierbare Zubereitungen, wobei
der Menge an Rubusosid im Bereich von 1 bis 200 ppm, bevorzugt im Bereich von 10 - 150 ppm, weiter bevorzugt im Bereich von 30 bis 100 ppm, besonders bevorzugt im Bereich von 50 bis 100 ppm, insbesondere bevorzugt im Bereich von 65 bis 100 ppm liegt,
und
die Gesamtmenge der Komponenten der Gruppe (ii), im Bereich von 0,5 bis 500 ppm, bevorzugt von 10 bis 200 ppm, besonders bevorzugt von 20 bis 100 ppm liegt,
und
bevorzugt wenigstens einer, weiter bevorzugt die Summe der Komponenten der Gruppe (iii), im Bereich von 0,005 bis 5 ppm, bevorzugt von 0,02 bis 2 ppm, besonders bevorzugt von 0,05 bis 0,5 ppm liegt,
und
die Summe der Komponenten der Gruppe (iv), im Bereich von 0,0005 bis 500 ppm, bevorzugt von 0,005 bis 100 ppm, besonders bevorzugt 0,5 bis 50 ppm liegt,
jeweils bezogen auf das Gesamtgewicht der Zubereitung.

Weiter bevorzugt sind erfindungsgemäße oral konsumierbare Zubereitungen, wobei die Gesamtmenge aller Komponenten (i-a), (ii) und (iii) bezogen auf die Gesamtteile der Zubereitung im Bereich von 0,5 bis 5000 ppm, bevorzugt im Bereich von 5 bis 1000 ppm, besonders bevorzugt im Bereich von 10 bis 500 ppm liegt.

Besonders bevorzugt liegen Konzentrationen (bezogen auf die fertige oral zu konsumierende Zubereitung enthaltend ein erfindungsgemäße oder erfindungsgemäß einzusetzende Aromakomposition) hierbei für (iv) eines oder mehrere der speichelfördenden, prickelnd, scharf und/oder warm schmeckenden die Alkamide (speichelfördernde Aroma- und/oder Geschmackstoffe) bei gleich oder unter 0,5 ppm, wobei der als kribbelnd, scharf, betäubend oder warm beschriebene Eigengeschmack weitgehend verschwindet, die speichelanregende Wirkung aber noch vorhanden ist. Dadurch erhält man eine besonders wirksame Maskierung, Verringerung oder Unterdrückung der bitteren, sauren und/oder adstringierenden Geschmackseindrücke.

Wie bereits erwähnt, betrifft ein Aspekt der vorliegenden Erfindung die Verwendung der erfindungsgemäßen bzw. erfindungsgemäß einzusetzenden Aromakompositionen zur Maskierung, Verminderung oder Unterdrückung des unangenehmen Geschmackseindruckes eines unangenehm schmeckenden Stoffes, d. h. als Geschmackskorrigenz. Vorzugsweise werden die erfindungsgemäßen bzw. erfindungsgemäß einzusetzenden Aromakompositionen in einer oral konsumierbaren Zubereitung eingesetzt, wobei die Zubereitung einen oder mehrere bitter, sauer und/oder adstringierend schmeckende Stoffe sowie gegebenenfalls einen oder mehrere weitere unangenehm schmeckende Stoffe umfasst.

Erfindungsgemäße Zubereitungen umfassen vorzugsweise 0,000001 Gew.-% bis 1 Gew.-%, bezogen auf das Gesamtgewicht der Zubereitung, einer erfindungsgemäßen bzw. einer erfindungsgemäß einzusetzenden Aromakomposition. Daneben sind üblicherweise ein oder mehrere unangenehm schmeckende Stoffe vorhanden, wobei diese jeweils einzeln in einer Konzentration vorliegen, die regelmäßig über der Erkennungsgeschmacksschwelle des jeweiligen Stoffes liegt.

Die oral konsumierbaren Zubereitungen, die der Ernährung oder dem Genuss dienen, sind z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke, Instant-Fruchtgetränke), Fleischprodukte (z.B. Schinken, Frischwurst- oder Rohwurstzubereitungen, gewürzte oder marinierte Frisch-oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Milchgetränke, Buttermilchgetränke, Milcheis, Joghurt, Kefir, Frischkäse, Weichkäse, Hartkäse, Trockenmilchpulver, Molke, Butter, Buttermilch, teilweise oder vollständig hydrolisierte Milchprotein-haltige Produkte), Produkte aus Sojaprotein oder anderen Sojabohnen-Fraktionen (z.B. Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, eingekochte Gemüse), Knabberartikel (z.B. gebackene oder frittierte Kartoffelchips oder Kartoffelteigprodukte, Extrudate auf Mais- oder Erdnussbasis), Produkte auf Fett- und Ölbasis oder Emulsionen derselben (z.B. Mayonnaise, Remoulade, Dressings), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden. Die Zubereitungen im Sinne der Erfindung können auch zur Herstellung weiterer der Ernährung oder dem Genuss dienenden Zubereitungen dienen. Die Zubereitungen im Sinne der Erfindung können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Die oral konsumierbaren Zubereitungen, die der Mundpflege dienen, sind insbesondere Mund- und/oder Zahnpflegemittel wie Zahnpasten, Zahngele, Zahnpulver, Mundwässer, Kaugummis und andere Mundpflegemittel.

Die oral konsumierbaren Zubereitungen, die zur pharmazeutischen Anwendung dienen, umfassen mindestens einen pharmazeutischen Wirkstoff.

Vorteilhafte pharmazeutische Wirkstoffe sind beispielsweise nichtsteroidale pharmazeutische und steroidale entzündungshemmende Substanzen.

Bevorzugte steroidale entzündungshemmende Substanzen sind vom Kortikosteroiden-Typ wie z.B. Hydrocortison, Hydrocortison-Derivate wie Hydrocortison-17-butyrat, Dexamethason, Dexamethasonphosphat, Methylprednisolon oder Cortison.

Vorteilhafte nichtsteroidale pharmazeutische Wirkstoffe sind beispielsweise Entzündungshemmer wie Oxicame wie Piroxicam oder Tenoxicam; Salicylate wie Aspirin® (Acetylsalicylsäure), Disalcid, Solprin oder Fendosal; Essigsäure-Derivate wie Diclofenac, Fenclofenac, Indomethacin, Sulindac, Tolmetin, oder Clindanac; Fenamate wie Mefenamic, Meclofenamic, Flufenamic oder Niflumic; Propionsäure-Derivate wie Ibuprofen, Naproxen, Flurbiprofen, Benoxaprofen oder Pyrazole wie Phenylbutazon, Oxyphenylbutazon, Febrazon oder Azapropazon.

Besonders bevorzugte pharmazeutische Zubereitungen sind nicht verschreibungspflichtige Produkte und frei verkäufliche Arzneimittel, sogenannte OTC ("over the counter") - Präparate, enthaltend Wirkstoffe wie Paracetamol, Acetylsalicylsäure oder Ibuprofen, Vitamine (beispielsweise Vitamin H, Vitamine aus der B-Reihe wie Vitamin B1, B2, B6, B12, Niacin, Panthotensäure, vorzugsweise in Form von (Brause)Tabletten oder Kapseln), Mineralien (vorzugsweise in Form von (Brause)Tabletten oder Kapseln) wie Eisensalze, Zinksalze, Selensalze, Produkte enthaltend Wirkstoffe oder Extrakte von Spitzwegerich (z.B. in Hustensirup) oder Johanniskraut.

Weitere übliche Wirk-, Grund-, Hilfs- und Zusatzstoffe für die oral konsumierbaren Zubereitungen können in Mengen von 5 bis 99,99 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,99 Gew.-%, vorzugsweise 5 bis 80 Gew.-%, bezogen auf das Gesamtgewicht der Zubereitung, aufweisen.

Die oral konsumierbaren Zubereitungen, enthaltend die erfindungsgemäße bzw. erfindungsgemäß einzusetzende Mischung bzw. Aromakomposition, werden gemäß einer bevorzugten Ausgestaltung hergestellt, indem die Bestandteile der Gruppen (i-a), (ii) und gegebenenfalls auch (iii) der erfindungsgemäßen bzw. erfindungsgemäß einzusetzenden Aromakomposition als Substanzen, als Lösung oder in Form eines Gemischs mit einem festen oder flüssigen Trägerstoff in eine der Ernährung, der Mundpflege oder dem Genuss dienende oder orale pharmazeutische Basis-Zubereitung eingearbeitet werden. Vorteilhafterweise können als Lösung vorliegende oral konsumierbaren Zubereitungen auch durch Sprühtrocknung in eine feste Zubereitung überführt werden.

Gemäß einer weiteren bevorzugten Ausführungsform wird zur Herstellung einer erfindungsgemäßen oral konsumierbaren Zubereitungen eine erfindungsgemäße bzw. erfindungsgemäß einzusetzende Aromakomposition bzw. eine erfindungsgemäß einzusetzende Mischung sowie gegebenenfalls weitere andere Bestandteile der erfindungsgemäßen Zubereitung in Form von Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten, Cellulose oder Cellulosederivaten (z.B. Hydroxypropylcellulose), anderen Polysacchariden (z.B. Alginat), natürlichen Fetten, natürlichen Wachsen (z.B. Bienenwachs, Carnaubawachs) oder aus Proteinen, z.B. Gelatine, eingearbeitet.

In einem weiteren bevorzugten Herstellungsverfahren wird eine erfindungsgemäße bzw. erfindungsgemäß einzusetzende Aromakomposition bzw. eine erfindungsgemäß einzusetzende Mischung vorher mit einem oder mehreren geeigneten Komplexbildnern, beispielsweise mit Cycloglycanen, z.B. Cyclofructanen, Cyclodextrinen oder Cyclodextrinderivaten, bevorzugt alpha-, beta-, und/oder gamma-Cyclodextrin, komplexiert und in dieser komplexierten Form eingesetzt.

Besonders bevorzugt ist eine erfindungsgemäße oral konsumierbare Zubereitung, bei der die Matrix so gewählt wird, dass die erfindungsgemäße bzw. erfindungsgemäß einzusetzende Aromakomposition bzw. eine erfindungsgemäß einzusetzende Mischung verzögert von der Matrix freigegeben wird, so dass man eine langanhaltende Wirkung erhält.

Als weitere Bestandteile für erfindungsgemäße oral konsumierbare Zubereitungen können übliche Grund-, Hilfs- und Zusatzstoffe für Nahrungs- oder Genussmittel verwendet werden. Einige dieser Substanzen besitzen einen unangenehmen Geschmack im Sinne von bitter und adstringierend wirkend.

Beispiele üblicher Grund-, Hilfs- und Zusatzstoffe für erfindungsgemäße oral konsumierbare Zubereitungen sind Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose), Zuckeralkohole (z.B. Sorbit), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. Taurin), Peptide, native oder prozessierte Proteine (z.B. Gelatine), Enzyme (z.B. Peptidasen), Nukleinsäuren, Nucleotide, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), Süßstoffe (z.B. Saccharin, Cyclamat, Aspartam, Neotam), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, synthetische, natürliche oder künstliche Aromastoffe oder Riechstoffe sowie Geruchskorrigenzien.

Zahnpflegemittel (als Basis für die Mundpflege dienende Zubereitungen), die eine erfindungsgemäße bzw. erfindungsgemäß einzusetzende Aromakomposition enthalten, umfassen bevorzugt ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{o}, Süßstoffe, wie z.B. Saccharin, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffen wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamiden (z.B. 2,2-Düsopropylpropionsäuremethylamid), Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen, Natriumbicarbonat und/oder Geruchskorrigenzien.

Kaugummis (als weiteres Beispiel für die Mundpflege dienende Zubereitungen), welche eine erfindungsgemäße bzw. erfindungsgemäß einzusetzende Aromakomposition bzw. eine erfindungsgemäß einzusetzende Mischung enthalten, umfassen bevorzugt eine Kaugummibase, d.h. eine beim Kauen plastisch werdende Kaumasse, Zucker verschiedener Arten, Zuckeraustauschstoffe, Süßstoffe, Zuckeralkoholen, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), die im vorherigen Abschnitt genannten Kühlwirkstoffe, Feuchthaltemittel, Verdicker, Emulgatoren, Aromen, Stabilisatoren und/oder Geruchskorrigenzien.

Bevorzugte erfindungsgemäße oral konsumierbare Zubereitungen sind der Ernährung, der Mundpflege oder dem Genuss dienende Zubereitungen, hinsichtlich deren Zusammensetzungen das Vorgesagte gilt.

Die erfindungsgemäßen oral konsumierbaren Zubereitungen sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel) oder wieder aus der Mundhöhle entfernt zu werden (z.B. Kaugummis oder Zahnpasta). Es versteht sich, dass der Einsatz der erfindungsgemäßen bzw. erfindungsgemäß einzusetzenden Aromakompositionen für jede Art solcher Produkte vorgesehen ist. Zu diesen Produkten gehören dabei sämtliche Stoffe oder Erzeugnisse, die dazu bestimmt sind, in verarbeitetem, teilweise verarbeitetem oder unverarbeitetem Zustand vom Menschen in die Mundhöhle aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

Es versteht sich, dass die erfindungsgemäßen bzw. erfindungsgemäße einzusetzenden Aromakompositionen insbesondere in Lebensmitteln eingesetzt werden können. Im Rahmen des vorliegenden Textes werden unter einem "Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B. Kaugummis) sind im Rahmen des vorliegenden Textes als Lebensmittel zu verstehen, da bei ihnen nicht auszuschließen ist, dass sie zumindest teilweise geschluckt werden.

Insbesondere werden die erfindungsgemäßen bzw. erfindungsgemäß einzusetzenden Aromakompositionen in verzehrfertigen Lebensmitteln eingesetzt. Unter einem verzehrfertigen Lebensmittel ist hierbei ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch entsprechende Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

Unter einer der Mundpflege dienenden Zubereitung (Mundpflegeprodukt, auch Mundhygieneprodukt oder mundhygienische Zubereitung genannt) im Sinne der Erfindung wird eine Zubereitung zur Reinigung und Pflege der Mundhöhle und des Rachenraumes sowie zur Erfrischung des Atems verstanden. Hierbei ist die Pflege der Zähne und des Zahnfleisches ausdrücklich eingeschlossen. Darreichungsformen gebräuchlicher mundhygienischer Formulierungen sind Cremes, Gele, Pasten, Schäume, Emulsionen, Suspensionen, Areosole, Sprays als auch Kapseln, Granulate, Pastillen, Tabletten, Bonbons oder Kaugummis, ohne dass diese Aufzählung für die Zwecke dieser Erfindung limitierend verstanden werden soll.

Die erfindungsgemäßen bzw. erfindungsgemäß einzusetzenden Aromakompositionen können auch in Lebensmittel-Halbfertigwaren eingesetzt werden. Der Begriff Lebensmittel-Halbfertigware bezieht sich hierbei auf Lebensmittel, die dazu bestimmt sind, erst im weiter verarbeiteten Zustand, z. B. nach Hinzufügen von für den sensorischen Eindruck (mit)entscheidenden Aroma- oder Geschmacksstoffen verzehrt zu werden.

Entsprechend dem Vorgesagten ist Teil der Erfindung auch die Verwendung einer erfindungsgemäßen bzw. erfindungsgemäß einzusetzenden Aromakomposition (bevorzugt ohne eine Verbindung, die bittere, saure und/oder adstringierende Eindrücke im Mundraum erzeugen kann, zum Verringern oder Unterdrücken einer bitteren, sauren und/oder adstringierenden Wirkung einer Verbindung.

Bei der erfindungsgemäßen Verwendung kann es vorteilhaft sein, wenn nicht alle bitterschmeckenden Nuancen (das Gleiche gilt auch gegebenenfalls für die saure und adstringierende Wirkung) überdeckt werden, da diese unter Umständen auch erwünscht sein können.

Für die nachfolgend beschriebenen erfindungsgemäßen Verfahren gelten die obigen Angaben zu bevorzugten und besonders bevorzugten Ausgestaltungen der erfindungsgemäßen Verwendungen und oral konsumierbaren Zubereitungen entsprechend.

Teil der Erfindung ist auch ein Verfahren zum Maskieren, Verringern oder Unterdrücken der bitteren, sauren und/oder adstringierenden Wirkung einer Verbindung, umfassend die Schritte
a) Bereitstellen einer oder mehrerer Verbindungen, die eine bittere, saure und/oder adstringierende Wirkung im Mundraum entfalten können,
b) Bereitstellen einer wirksamen Menge an Rubusosid, vorzugsweise in Form einer erfindungsgemäß einzusetzenden Mischung oder einer erfindungsgemäßen bzw. erfindungsgemäß einzusetzenden Aromakomposition, vorzugsweise in einer der oben genannten bevorzugten Ausgestaltungen,
   und
c) Vermischen der in Schritt a) und b) bereitgestellten Komponenten in einem Verhältnis zueinander, so dass die Verbindung mit bitterer, saurer und/oder adstringierender Wirkung diese Wirkung bei Einführen des Gemisches in den Mundraum nur abgeschwächt oder gar nicht entfaltet.

Schließlich betrifft die Erfindung auch ein Verfahren zur Herstellung einer erfindungsgemäßen oral konsumierbaren Zubereitung, gekennzeichnet durch folgende Schritte:
- Bereitstellen einer oral konsumierbaren Ausgangsmischung, welche einen oder mehrere bitter, sauer und/oder adstringierend schmeckende Stoffe in einer Menge enthält, so dass diese Ausgangsmischung wahrnehmbar bitter, sauer und/oder adstringierend schmeckt,
- Bereitstellen von Rubusosid, vorzugsweise in Form einer erfindungsgemäß einzusetzenden Mischung oder einer erfindungsgemäßen bzw. erfindungsgemäß einzusetzenden Aromakomposition, vorzugsweise in einer der oben genannten bevorzugten Ausgestaltungen, oder der einzelnen Bestandteile einer solchen Mischung,
- Vermischen des Rubusosids und der oral konsumierbaren Ausgangsmischung, so dass das die Menge an Rubusosids ausreicht, um im Vergleich mit der Ausgangsmischung den bitteren, sauren und/oder adstringierenden Geschmackseindruck des oder der bitter, sauer und/oder adstringierend schmeckenden Stoffe zu maskieren, verringern oder unterdrücken.

Nachfolgend wird die Erfindung anhand von Beispielen und den Ansprüchen weiter erläutert. Die Beispiele dienen zur Verdeutlichung der Erfindung, ohne den Schutzbereich der Patentansprüche einzuschränken.

### Beispiele:

Sofern nicht anders angegeben, beziehen sich alle Angaben auf das Gewicht.

**Beispiel 1: Analytische Zusammensetzung eines erfindungsgemäß einzusetzenden Rubus suavissimus- Extraktes mit 22,6 Gew.-% Rubusosid, gelöst in Glycerin**

| CAS-Nr. | Name | Gew.-% |
|---|---|---|
| 64849-39-4 | **Rubusosid** | **22,6%** |
| 476-66-4 | Ellagsäure | 0,22% |
| | Glucose | 0,1% |
| | Wasser | 29,8% |
| | Glycerin | 30,5% |
| | Proteine, gesamt | 1,3% |
| | Freie Zucker, gesamt | 4,6% |
| | Gesamtgehalt an Phenolen, (nach Folin-Ciocalteu; inklusive Ellagsäure und weitere Polyphenole) | 5,7% |
| | Unbekannte Stoffe | Ad 100 % |

### Anwendungsbeispiel 1: Bitter-Unterdrückung mit Rubusosid bzw. einem Rubus suavissimus - Extrakt

Um die Reduzierung des Bitter-Eindrucks zu quantifizieren, wurde die Bitterkeit der Bitterstofflösung in Wasser und einer Probe, die Bitterstoff und die jeweils angegebene Menge der zu testenden Verbindung bzw. des Extraktes (Test-Substanz) enthielt, von einer Expertengruppe bestimmt (Einstufung 0 [nicht bitter] bis 10 [extrem bitter]). Die Auswertung erfolgte als Berechnung der Reduktion (in %) des Bittereindrucks aus den Durchschnittswerten der Einschätzungen der Bitterstofflösung bzw. der Bitterstoff und beispielhafte Test-Substanz enthaltenden Lösungen.

| **Test-Substanz** | **Bitterstoff** | **Bitter-Eindruck (1-10)** | | **% Reduktion des Bitter-Eindrucks** |
|---|---|---|---|---|
| | | **a) ohne Test-substanz** | **b) mit Test-substanz** | |
| 60 ppm *Rubus suavissimus -* Extrakt aus Beispiel 1 | 500 ppm Coffein | 5,2 | 4,1 | 21 % |
| 60 ppm *Rubus suavissimus -* Extrakt aus Beispiel 1 | 0,5 % Kaliumchlori d | 4,8 | 4,4 | 9 % |

### Anwendungsbeispiel 2: Aromakompositionen

| | **Aromakomposition (Einsatz in Gew.-%)** | | | | | | | |
|---|---|---|---|---|---|---|---|---|
| Inhaltsstoff | A | B | C | D | E | F | G | H |
| *Rubus suavissimus* Extrakt, aus Beispiel 1 | | 5 | | 40 | 17,5 | 32,5 | 40 | |
| *Rubus suavissimus -* Extrakt, trocken enthaltend 10% Rubusosid | 10 | | 65 | | | | | 35 |
| Homoeriodictyol | 5 | | 2,5 | | | | | |
| Eriodictyol | | 2,5 | | | | | | |
| Phloretin | | | | 1 | | | | |
| Hesperetin | | | | | 0,5 | | | |
| 10 Gew.-% trans-Pellitorin (z.B. nach WO 2004/043906) in 1,2-Propylenglycol/ Diethylmalonat | | | | 0,25 | 0,25 | 0,5 | 0,25 | |
| Extrakt aus Hydrangea macrophylla gemäß US Provisional Application 61/237,866 (Symrise), enthaltend Phyllodulcin | 2,5 | | 2,5 | | | | | 2,5 |
| Jambu-Oleoresin, enthaltend 30 Gew.-% Spilanthol in 1,2-Propylenglycol (Robertet) | | 0,1 | 0,1 | | | | | |
| 1,2-Propylenglycol | - | 20 | - | ad 100 | ad 100 | 20 | ad 100 | - |
| Glycerin | - | ad 100 | - | 20 | 20 | ad 100 | 20 | - |
| Maltodextrin | ad 100 | - | ad 100 | - | - | - | - | ad 100 |

Die Stoffe bzw. Lösungen werden in den oben angegebenen Mengenverhältnissen gemischt und dann mit 1,2-Propylenglycol und/oder Glycerin aufgenommen und durch leichtes Erwärmen vollständig gelöst bzw. mit den festen Trägerstoffen homogen gemischt.

### Anwendungsbeispiel 3: Sprühgetrocknete Aromakompositionen

| | **Aromakomposition (Einsatz in Gew.-%)** | | | | | | | |
|---|---|---|---|---|---|---|---|---|
| Inhaltsstoff | A | B | C | D | E | F | G | H |
| Maltodextrin aus Weizen | 24,3 | 24,3 | 24,3 | 24,3 | 24,3 | 24,3 | 24,3 | 24,3 |
| Gummi Arabicum | 6,1 | 6,1 | 6,1 | 6,1 | 6,1 | 6,1 | 6,1 | 6,1 |
| *Rubus suavissimus -* Extrakt, flüssig, enthaltend 20 % Rubusosid | 10 | 10 | 8 | 10 | 8 | 10 | 12 | 12 |
| Trans-Pellitorin nach WO 2004/043906 | 0,02 | 0,02 | 0,01 | 0,02 | 0,01 | 0,01 | 0,02 | 0,03 |
| Homoeriodictyol, Natriumsalz | 1 | 1 | | 1,2 | | | 2 | |
| Hesperetin | | 0,2 | | | | | | |
| Phloretin | | | 0,4 | | | | | |
| Trinkwasser | ad 100 | ad 100 | ad 100 | ad 100 | ad 100 | ad 100 | ad 100 | ad 100 |

Das Trinkwasser wird in einem Behälter vorgelegt und das Maltodextrin und das Gummi Arabicum darin gelöst. Anschließend werden Bestandteile mit einem Mixer (Ultra Turrax) in die oben beschriebene Trägerstofflösung emulgiert. Die Temperatur des resultierenden Gemisches sollte 30°C nicht überschreiten. Das Gemisch wird dann sprühgetrocknet (Solltemperatur Eingang: 185 - 195°C, Solltemperatur Ausgang: 70 - 75°C). Die sprühgetrocknete Halbfertigware enthält ca. 18 - 22 % der Aromakompositionen.

Analog können auch sprühgetrocknete Zubereitungen mit anderen erfindungsgemäßen bzw. erfindungsgemäß zu verwendenden Aromakompositionen hergestellt werden.

### Anwendungsbeispiel 4: Verwendung der Aromakompositionen in oral konsumierbaren Zubereitungen

| | **Zubereitung (Einsatz in Gew.-%)** | | | | | |
|---|---|---|---|---|---|---|
| | A | B | C | D | E | F |
| Joghurt 0,1 %Fett | 99,9 | | | | | |
| Joghurt 1,5%Fett | | 99,9 | | | | |
| Orangensaft | | | | | 99,9 | 99,9 |
| Grüntee-Getränk | | | 99,8 | 99,85 | | |
| Aromakomposition 2E | 0,1 | | | | 0,1 | |
| Aromakomposition 2F | | 0,1 | | | | 0,1 |
| Aromakomposition 3B | | | 0,2 | | | |
| Aromakomposition 3G | | | | 0,15 | | |

Die aromatisierten Proben zeigen A, B, E und F zeigen gegen über der unaromatisierten Base einen reduzierten Säureeindruck. Die aromatisierten Proben C und D weisen gegenüber den unaromatisierten Proben eine stark reduzierte Wahrnehmung der Bitterkeit und im Falle der Joghurts und des Orangensaftes der Säure und Adstringens auf, ohne dass die Süße zunimmt.

### Anwendungsbeispiel 5: Aromakompositionen zur Maskierung eines bitteren und adstringerenden Geschmacks

| | **Aromakomposition (Einsatz in Gew.-%)** | | | | | | | | | | | |
|---|---|---|---|---|---|---|---|---|---|---|---|---|
| **Inhaltsstoff** | **A** | **B** | **C** | **D** | **E** | **F** | **G** | **H** | **I** | **J** | **K** | **L** |
| Symrise Sahnearoma in 1,2-Propylenglycol | | | 0,8 | 1 | 1 | | | | | | | |
| Symrise Frühlingskräuteraro ma, sprühgetrocknet | | | | | | | 5 | 2,5 | | | | |
| Symrise Sojamaskingaroma in 1,2 Propylenglycol | | | | | 10 | | | | | | | |
| Symrise Sojamaskingaroma, sprühgetrocknet | | | | | | 10 | | | | | | |
| Symrise Saftverstärkeraroma | 10 | | | | | | | | 5 | | | |
| Symrise Orangenaroma | | 2,5 | | | | | | | | | | |
| *Rubus suavissimus* - Extrakt, trocken, enthaltend 10 % Rubusosid | | | | | | 35 | 40 | 80 | | | | |
| *Rubus suavissimus* - Extrakt, flüssig, enthaltend Rubusosid aus Beispiel 1 | 40 | 17,5 | 5 | 17, 5 | 32, 5 | | | | 40 | | | |
| Homoeriodictyol, Natriumsalz | | | | | | 2,5 | | | | | | |
| Hesperetin | 0,5 | | | 0,5 | 0,5 | | | | | | | |
| 10 Gew.-% Pellitorin (z.B. nach WO 2004/043906) in 1,2-Propylenglycol/Dieth ylmalonat | 0,2 5 | | 0,2 5 | 0,5 | | | | | | | | |
| Glycerin | ad 100 | ad 100 | ad 100 | ad 100 | ad 100 | | | | ad 100 | | | |
| 1,2-Propylenglycol | 20 | 30 | 30 | 20 | 20 | | | | 30 | | | |
| Maltodextrin | | | | - | | ad 100 | ad 100 | ad 100 | | | | ad 100 |

Die Stoffe bzw. Lösungen werden in den oben angegebenen Mengenverhältnissen gemischt und dann mit Propylenglycol und/oder Glycerin aufgenommen und durch leichtes Erwärmen vollständig gelöst bzw. mit den festen Trägerstoffen homogen gemischt.

### Anwendungsbeispiel 6: Reduktion des Adstringenz- und Säureeindrucks

In einem Panel aus sensorisch geschulten Personen wurden die folgenden Produkte jeweils ohne und mit einer Aromakomposition bewertet. Der Adstringenz- und der Säureeindruck wurden auf einer Skala von 1 (nicht wahrnehmbar) bis 9 (sehr stark) bewertet und über die Personen gemittelt.

| **Oral konsumierbare Zubereitung** | **Test-Substanz** | **Adstringenz-Eindruck (0-9)** | | **Säure-Eindruck (0-9)** | |
|---|---|---|---|---|---|
| | | **a) ohne Test-Substan z** | **b) mit Test-Substan z** | **a) ohne Test-Substan z** | **b) mit Test-Substan z** |
| **Joghurt 0,1% Fett** | 0,1% Aromakomposition aus Anwendungsbeispiel 5C | 4,5 | 3 | 6 | 4 |
| **Joghurt 0,1% Fett** | 0,1% Aromakomposition aus Anwendungsbeispiel 5D | 4,5 | 2 | 6 | 3 |
| **Joghurt 0,1% Fett** | 10 mg/kg Rubusosid | 5 | 5 | 7 | 5,5 |
| **Soja-Joghurt 2,7% Fett** | 0,1% Aromakomposition aus Anwendungsbeispiel 5F | 7 | 5 | 4 | 2 |
| **Soja-Joghurt 2,7% Fett** | 0,1% Aromakomposition aus Anwendungsbeispiel 5E | 7 | 4,5 | 4 | 2 |
| **Joghurt 0,1% Fett** | 10 mg/kg Rubusosid | 5 | 5 | 7 | 5,5 |

### Anwendungsbeispiel 7: Reduktion des Bitter- und Säureeindrucks

In einem Panel aus sensorisch geschulten Personen wurden die folgenden Produkte jeweils ohne und mit einer Aromakomposition bewertet. Der Bitter- (nur im Falle des Orangensaftes) und der Säureeindruck wurden auf einer Skala von 1 (nicht wahrnehmbar) bis 9 (sehr stark) bewertet und über die Personen gemittelt.

| **Oral konsumierbare Zubereitung** | **Test-Substanz** | Bitter-Eindruck **(0-9)** | | Säure-Eindruck **(0-9)** | |
|---|---|---|---|---|---|
| | | **a) ohne Test-substanz** | **b) mit Test-substanz** | **a) ohne Test-substanz** | **b) mit Test-substanz** |
| **Orangen-Direktsaft** | 0,1% Aromakomposition aus Anwendungsbeispiel 5A | 4,5 | 3 | 6 | 4 |
| **Ananas-Direktsaft** | 0,1% Aromakomposition aus Anwendungsbeispiel 5l | n.b. | n.b. | 4 | 3 |
| **Salat-Dressing (auf Wasser-Öl-Basis)** | 0,2% Aromakomposition aus Anwendungsbeispiel 5G | n.b. | n.b. | 7 | 5,5 |

| | | | | | |
|---|---|---|---|---|---|
| n.b. = nicht bewertet | | | | | |

## Patentansprüche

1. Verwendung von Rubusosid zum Maskieren, Verringern oder Unterdrücken eines bitteren, sauren und/oder adstringierenden Geschmackseindrucks eines bitter, sauer und/oder adstringierend schmeckenden Stoffes.

2. Verwendung nach Anspruch 1, **dadurch gekennzeichnet, dass** Rubusosid in Form einer Mischung verwendet wird, umfassend
(a) Rubusosid,
und
(b) eine oder mehrere phenolische Verbindungen, bevorzugt ein oder mehrere Polyphenole, vorzugsweise wie sie in einer Rubus-Species, bevorzugt in *Rubus suavissimus,* vorkommen.

3. Verwendung nach Anspruch 2, **dadurch gekennzeichnet, dass** die Mischung ein Extrakt einer *Rubus-Species* ist, vorzugsweise ein Extrakt aus den Blättern und gegebenenfalls den Stängeln einer Rubus-Species, bevorzugt aus den Blättern und gegebenenfalls den Stängeln von *Rubus suavissimus.*

4. Verwendung nach Anspruch 2 oder 3, **dadurch gekennzeichnet, dass** ein, zwei, drei oder mehr phenolische Verbindungen, vorzugsweise ein, zwei, drei oder mehr Polyphenole, des Bestandteils (b) ausgewählt sind aus der Gruppe bestehend aus Ellagsäure, Gallussäure und Flavonoiden, dabei vorzugsweise Quercetinglycosiden, dabei insbesondere Rutin und Isoquercitrin.

5. Verwendung nach einem der Ansprüche 2 bis 4, **dadurch gekennzeichnet, dass** die Mischung folgende Bestandteile umfasst:
(a) Rubusosid in einer Menge im Bereich von 0,1 bis 50 Gew.-%, bevorzugt im Bereich von 0,5 bis 30 Gew.-%, besonders bevorzugt im Bereich von 1 bis 25 Gew.-%,
(b) eine oder mehrere phenolische Verbindungen, vorzugsweise ein oder mehrere Polyphenole, in einer Gesamtmenge im Bereich von 0,1 Gew.-% bis 25 Gew.-%, bevorzugt im Bereich von 0,5 Gew.-% bis 15 Gew.-%, weiter bevorzugt im Bereich von 1 Gew.-% bis 10 Gew.-%, besonders bevorzugt im Bereich von 2 Gew.-% bis 8 Gew.-%,
und
(c) gegebenenfalls ein oder mehrere oral konsumierbare flüssige Verdünnungsmittel, vorzugsweise ausgewählt aus der Gruppe bestehend aus Ethanol, 1,2-Propylenglycol, Pflanzenöltriglyceride, Triacetin und/oder Glycerin, bevorzugt in einer Menge im Bereich von 1 bis 75 Gew.-%, bevorzugt im Bereich von 5 bis 50 Gew.-%, besonders bevorzugt im Bereich von 10 bis 40 Gew.-%,
jeweils bezogen auf das Gesamtgewicht der Mischung.

6. Verwendung nach einem der Ansprüche 3 bis 5, **dadurch gekennzeichnet, dass** der Extrakt gewonnen wird durch ein Verfahren, umfassend folgende Schritte:
a) Extraktion von Blättern und gegebenenfalls Stengeln mit einem geeigneten Extraktionsmittel, vorzugsweise ausgewählt aus der Gruppe bestehend aus Wasser, sub- oder superkritischem Wasser, superkritischem CO₂, Wasser-Ethanol-Gemische, Ethanol, Essigsäureethylester, n-Heptan und n-Hexan, bei einer Temperatur im Bereich von 0°C bis zur Siedetemperatur des oder der jeweiligen Extraktionsmittel, unter Normaldruck, reduziertem oder erhöhtem Druck, vorzugsweise durch Soxhlet-, Gegenstrom-, Perkolations- oder einfaches Siebkorbverfahren, wodurch ein Primärextrakt erhalten wird,
b) gegebenenfalls Aufkonzentrierung des in Schritt a) erhaltenen Primärextraktes, vorzugsweise durch destillative oder andere evaporative oder pervaporative Verfahren,
c) Behandlung des (gegebenenfalls in Schritt b) aufkonzentrierten) Primärextraktes mit einem oder mehreren Adsorbentien, vorzugsweise ausgewählt aus der Gruppe bestehend aus Kieselgel, Aktivkohle, Kieselgur, Aluminiumoxid, basischer, saurer oder neutraler Ionentauscher, vorzugsweise im Batch oder Säulenverfahren, wodurch ein aufgereinigter Extrakt (Sekundärextrakt) erhalten wird,
d) Trocknung des in Schritt c) erhaltenen Sekundärextraktes, vorzugsweise durch ein evaporatives oder pervaporatives Verfahren,
e) gegebenenfalls Mischen des in Schritt d) erhaltenen getrockneten Sekundärextraktes mit einem geeigneten Verdünnungsmittel oder einem Gemisch zweier oder mehrerer Verdünnungsmittel, bevorzugt Ethanol, 1,2-Propylenglycol, Pflanzenöltriglycerid(en), Triacetin und/oder Glycerin, so dass vorzugsweise eine Lösung erhalten wird.

7. Verwendung nach einem der Ansprüche 2 bis 6, **dadurch gekennzeichnet, dass** das Gewichtsverhältnis von Bestandteil (a) zur Gesamtmenge der phenolischen Verbindungen, vorzugsweise zur Gesamtmenge der Polyphenole, des Bestandteils (b) im Bereich von 100 : 1 bis 1 : 10, bevorzugt im Bereich von 50 : 1 bis 1 : 5 liegt, weiter bevorzugt im Bereich von 10 : 1 bis 1 : 1, besonders bevorzugt im Bereich von 5 : 1 bis 1 : 1,
jeweils bezogen auf das Gesamtgewicht der Mischung.

8. Oral konsumierbare Zubereitung, enthaltend
(i-a) Rubusosid in einer Menge im Bereich von 1 - 200 mg/kg, bevorzugt im Bereich von 10 - 150 mg/kg, weiter bevorzugt im Bereich von 30 - 100 mg/kg, besonders bevorzugt im Bereich von 50 - 100 ppm, insbesondere bevorzugt im Bereich von 65 - 100 mg/kg, jeweils bezogen auf das Gesamtgewicht der oral konsumierbaren Zubereitung, in Form einer Mischung wie in einem der Ansprüche 2 bis 7 definiert, bevorzugt in Form eines Extraktes von *Rubus suavissismus,*
(i-b) einen oder mehrere bitter, sauer und/oder adstringierend schmeckende Stoffe, in einer Menge, welche in einer ansonsten identisch zusammengesetzten oral konsumierbaren Vergleichszubereitung ohne Bestandteil (i-a) wahrnehmbar bitter, sauer und/oder adstringierend schmeckt,
und die Menge an Bestandteil (i-a) ausreicht, um im Vergleich mit der Vergleichszubereitung den bitteren, sauren und/oder adstringierenden Geschmackseindruck des oder der bitter, sauer und/oder adstringierend schmeckenden Stoffe zu maskieren, verringern oder unterdrücken,
wobei vorzugsweise Bestandteil
(i-b) in einer Menge vorliegt, die doppelt so hoch ist wie oder höher ist als
- der Erkennungsgeschmacksschwellenwert des bitter, sauer oder adstringierend schmeckenden Stoffes bzw. der niedrigste Erkennungsgeschmacksschwellenwert des bitter, sauer und/oder adstringierend schmeckenden Stoffes, wenn dieser zumindest zwei oder sämtliche der Geschmackseindrücke bitter, sauer und adstringierend vermittelt, sofern die Zubereitung lediglich einen bitter, sauer und/oder adstringierend schmeckenden Stoff enthält,
oder
- der niedrigste Erkennungsgeschmacksschwellenwert der bitter, sauer und/oder adstringierend schmeckenden Stoffe, sofern die Zubereitung mehr als einen bitter, sauer und/oder adstringierend schmeckenden Stoff enthält,
ausgenommen eine Zubereitung aus den Bestandteilen 12,50 Gew.-% Butter (82% Fett), 6,00 Gew.-% Zucker Saccharose 5,00 Gew.-% Magermilchpulver, 2,50 Gew.-% Glukosesirup (72%), 0,65 Gew.-% Emulgator SE 30 (Grindstedt Products, Dänemark), 0,20 Gew.-% Vanillearoma (Produkt 222292, Symrise), 2,00 Gew.-% Sorbitol, 0,01 Gew.-% Rebausid A, 0,010 Gew.-% Extrakt aus *Rubus suavissismus* enthaltend 5 Gew.-% Rubusosid, 0,10 Gew.-% Hesperetin (2,5% in 1,2-Propylenglykol), 0,05 Gew.-% Phloretin (2,5% in 1,2-Propylenglykol), 0,0001 Gew.-% o-Kumarsäure und Magermilch auf 100 Gew.-%.

9. Oral konsumierbare Zubereitung nach Anspruch 8, wobei Bestandteil
(i-b) einen oder mehrere sauer und optional adstringierend schmeckende Stoffe in einer Menge umfasst, welche in einer ansonsten identisch zusammengesetzten oral konsumierbaren Vergleichszubereitung ohne Bestandteil (a) wahrnehmbar sauer sowie gegebenenfalls zusätzlich adstringierend schmeckt,
und/oder
wobei Bestandteil
(i-b) einen oder mehrere sauer und adstringierend schmeckende Stoffe umfasst, welche vorzugsweise ausgewählt sind aus der Gruppe bestehend aus Ascorbinsäure, Benzoesäure, Glucuronsäure, Adipinsäure, Glutarsäure, Malonsäure, Bernsteinsäure, Äpfelsäure, Essigsäure, Citronensäure, Weinsäure, Phosphorsäure, Quercitrin, Gallus- oder Ellagsäureester von Kohlenhydraten, dabei insbesondere Pentagalloylglucose, optional galloylierte Catechine, optional galloylierte Epicatechine, Proanthocyanidine, Procyanidine, Thearubigenin, gamma-Oryzanol, Kaffeesäure oder deren Ester, dabei insbesondere Chlorogensäure und deren Isomere.

10. Oral konsumierbare Zubereitung nach Anspruch 8 oder 9, zusätzlich enthaltend
(ii) einen oder mehrere weitere bittermaskierende Aroma- und/oder Geschmackstoffe, und gegebenenfalls
(iii) einen oder mehrere weitere Aromastoffe, wobei vorzugsweise wenigstens ein Aromastoff ein Schlechtgerüche unterdrückender Aromastoff ist,
und gegebenenfalls
(iv) einen oder mehrere speichelfördernde Aroma- und/oder Geschmackstoffe, und gegebenenfalls
(v) einen oder mehrere Hilfs- oder Trägerstoffe.

11. Oral konsumierbare Zubereitung nach einem der Ansprüche 8 bis 10, wobei die Zubereitung eine pharmazeutische oder eine der Ernährung, der Mundpflege oder dem Genuss dienenden Zubereitung ist, vorzugsweise gewählt aus der Gruppe bestehen aus fermentierten Milchprodukten, dabei vorzugsweise Sauermilch, Joghurt, Kefir, Sauerrahm, Quark, Käse, fermentierten Sojaprodukten, dabei vorzugsweise Tempeh, Tofu, Soja Joghurt, fermentierten Getreideprodukten, fermentierten Fleischprodukten, unfermentierten oder fermentierten Obst- und Gemüsesäften, anderen Gemüse- und Fruchtzubereitungen und daraus hergestellten Produkten.

12. Oral konsumierbare Zubereitung nach einem der Ansprüche 8 bis 11, enthaltend
(ii) einen oder mehrere weitere bittermaskierende Aroma- und/oder Geschmackstoffe, ausgewählt aus der Gruppe bestehend aus
- Natriumsalzen, dabei vorzugsweise Natriumchlorid, Natriumlactat, Natriumcitrat, Natriumacetat, Natriumgluconoat,
- Hydroxyflavanonen, dabei vorzugsweise Eriodictyol, Homoeriodictyol,
- Hesperetin und dessen Natriumsalzen,
- Hydroxybenzoesäureamiden, dabei vorzugsweise 2,4-Dihydroxybenzoesäurevanillylamid, 2,4-Dihydroxybenzoesäure-*N*-(4-hydroxy-3-methoxybenzyl)amid-Mono-natriumsalz,
- Hydroxydeoxybenzoinen, dabei vorzugsweise 2-(4-Hydroxy-3-methoxyphenyl)-1-(2,4,6-trihydroxyphenyl)ethanon,
- Hydroxyphenylalkandionen, dabei vorzugsweise Gingerdion-[2] und Gingerdion-[3],
- Diacetyltrimeren,
- gamma-Aminobuttersäure,
- Divanillinen,
- 4-Hydroxydihydrochalconen, dabei vorzugsweise Phloretin,
- Deoxybenzoinen, dabei vorzugsweise 2-(4-Hydroxyphenyl)-1-(4-hydroxy-3-methoxyphenyl)ethanon, und
- Hydroxyflavanen, dabei vorzugsweise 3',7-Dihydroxy-4'-methoxyflavan,
und gegebenenfalls
(iv) einen oder mehrere speichelfördernde Aroma- und/oder Geschmackstoffe, bevorzugt ausgewählt aus der Gruppe, bestehend aus 2E,4E-Decadiensäure-N-isobutylamid (Pellitorin), 2E,4Z-Decadiensäure-N-isobutylamid (cis-Pellitorin), 2Z,4Z-Decadiensäure-N-isobutylamid, 2Z,4E-Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (alpha-Sanshool) und 2E,4E,8Z,11Z-Tetradecatetraensäure-N-(2-hydroxy-2-methylpropyl)amid (Bungeanool).

13. Verfahren zum Maskieren, Verringern oder Unterdrücken der bitteren, sauren und/oder adstringierenden Wirkung einer Verbindung, umfassend die Schritte
a) Bereitstellen einer oder mehrerer Verbindungen, die eine bittere, saure und/oder adstringierende Wirkung im Mundraum entfalten können,
b) Bereitstellen einer wirksamen Menge an Rubusosid, vorzugsweise in Form einer Mischung wie in einem der Ansprüche 2 bis 7 definiert,
und
c) Vermischen der in Schritt a) und b) bereitgestellten Komponenten in einem Verhältnis zueinander, so dass die Verbindung mit bitterer, saurer und/oder adstringierender Wirkung diese Wirkung bei Einführen des Gemisches in den Mundraum nur abgeschwächt oder gar nicht entfaltet.

14. Verfahren zur Herstellung einer oral konsumierbaren Zubereitung gemäß einem der Ansprüche 8 bis 12, **gekennzeichnet durch** folgende Schritte:
- Bereitstellen einer oral konsumierbaren Ausgangsmischung, welche einen oder mehrere bitter, sauer und/oder adstringierend schmeckende Stoffe in einer Menge enthält, so dass diese Ausgangsmischung wahrnehmbar bitter, sauer und/oder adstringierend schmeckt,
- Bereitstellen von Rubusosid, vorzugsweise in Form einer Mischung wie in einem der Ansprüche 2 bis 7 definiert oder der einzelnen Bestandteile einer solchen Mischung,
- Vermischen des Rubusosids und der oral konsumierbaren Ausgangsmischung, so dass das die Menge an Rubusosids ausreicht, um im Vergleich mit der Ausgangsmischung den bitteren, sauren und/oder adstringierenden Geschmackseindruck des oder der bitter, sauer und/oder adstringierend schmeckenden Stoffe zu maskieren, verringern oder unterdrücken.

15. Aromakomposition enthaltend
(i-a) Rubusosid in einer Menge im Bereich von 0,1 bis 50 Gew.-%, bevorzugt im Bereich von 0,5 bis 30 Gew.-%, besonders bevorzugt im Bereich von 1 bis 25 Gew.-%,
(i-b) eine oder mehrere phenolische Verbindungen, vorzugsweise ein oder mehrere Polyphenole, aus *Rubus suavissimus* in einer Gesamtmenge im Bereich von 0,1 Gew.-% bis 25 Gew.-%, bevorzugt im Bereich von 0,5 Gew.-% bis 15 Gew.-%, weiter bevorzugt im Bereich von 1 Gew.-% bis 10 Gew.-%, besonders bevorzugt im Bereich von 2 Gew.-% bis 8 Gew.-%,
(ii) einen oder mehrere weitere bittermaskierende Aroma- und/oder Geschmackstoffe, ausgewählt aus der Gruppe bestehend aus Eriodictyol, Homoeriodictyol, Hesperetin und deren Natriumsalzen, gamma-Aminobuttersäure, Divanillin, Phloretin, und 3',7-Dihydroxy-4'-methoxyflavan,
(iii) einen oder mehrere Schlechtgerüche unterdrückende Aromastoffe, ausgewählt aus der Gruppe bestehend aus Vanillin, Ethylvanillin, 4-Methoxy-2-hydroxybenzaldehyd, Ethylvanillinisobutyrat (= 3-Ethoxy-4-isobutyryloxybenzaldehyd), Furaneol^{®} (2,5-Dimethyl-4-hydroxy-3(2H)-furanon) und dessen Abkömmlinge, dabei vorzugsweise Homofuraneol, (= 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und dessen Abkömmlinge, dabei vorzugsweise Ethylmaltol, Cumarin und dessen Abkömmlinge, gamma-Lactone (dabei vorzugsweise gamma-Undecalacton, gamma-Nonalacton), delta-Lactone (dabei vorzugsweise 4-Methyldeltalacton, Massoilacton, Deltadecalacton, Tuberolacton, delta-Dodecalacton, delta-Tetradecalacton, delta-Hexadecalacton, delta-Octadecalacton), Methylsorbat, Diacetyl, 4-Hydroxy-2(oder 5)-ethyl-5(oder-2)-methyl-3(2H)furanon, 2-Hydroxy-3-methyl-2-cyclopentenone, 3-Hydroxy-4,5-dimethyl-2(5H)-furanon, Fruchtester und Fruchtlactone (dabei vorzugsweise Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd,
(iv) gegebenenfalls einen oder mehrere speichelfördernde Aroma- und/oder Geschmackstoffe, ausgewählt aus der Gruppe, bestehend aus 2E,4E-Decadiensäure-N-isobutylamid (Pellitorin), 2E,4Z-Decadiensäure-N-isobutylamid (cis-Pellitorin), 2Z,4Z-Decadiensäure-N-isobutylamid, 2Z,4E-Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (alpha-Sanshool) und 2E,4E,8Z,11Z-Tetradecatetraensäure-N-(2-hydroxy-2-methylpropyl)amid (Bungeanool),
(v) gegebenenfalls einen oder mehrere Hilfs- oder Trägerstoffe, ausgewählt aus der Gruppe bestehend aus Ethanol, 1,2-Propylenglycol, Pflanzenöltriglyceride, Triacetin und/oder Glycerin, bevorzugt in einer Menge im Bereich von 1 bis 75 Gew.-%, bevorzugt im Bereich von 5 bis 50 Gew.-%, besonders bevorzugt im Bereich von 10 bis 40 Gew.-%,
und
(vi) einen, zwei, drei, vier, fünf, sechs, sieben, acht, neun, zehn oder mehr flüchtige Aromastoffe mit einem Dampfdruck von größer oder gleich 0,01 Pa bei 25°C, insbesondere mit einem Dampfdruck von größer oder gleich 0,025 Pa bei 25°C, wobei die Schlechtgerüche unterdrückende Aromastoffe des Bestandteils (iii) von den flüchtigen Aromastoffen des Bestandteils (vi) ausgenommen sind,
wobei sich die Mengenangaben jeweils auf das Gesamtgewicht der Aromakomposition beziehen.

## Claims

1. A use of rubusoside for masking, reducing or suppressing a bitter, sour and/or astringent taste impression of a bitter, sour and/or astringent-tasting substance.

2. The use as claimed in claim 1, wherein rubusoside is used in the form of a mixture, comprising
(a) rubusoside,
and
(b) one or more phenolic compounds, preferably one or more polyphenols, preferably such as occur in a *Rubus* species, preferably in *Rubus suavissimus.*

3. The use as claimed in claim 2, wherein the mixture is an extract of a *Rubus* species, preferably an extract from the leaves and optionally from the stems of a *Rubus* species, preferably from the leaves and optionally from the stems of *Rubus suavissimus.*

4. The use as claimed in claim 2 or 3, wherein one, two, three or more phenolic compounds, preferably one, two, three or more polyphenols, of constituent (b) are selected from the group consisting of ellagic acid, gallic acid and flavonoids, preferably quercetin glycosides, and in particular rutin and isoquercitrin.

5. The use as claimed in one of claims 2 to 4, wherein the mixture comprises the following constituents:
(a) rubusoside in an amount in the range from 0.1 to 50 wt.%, preferably in the range from 0.5 to 30 wt.%, particularly preferably in the range from 1 to 25 wt.%,
(b) one or more phenolic compounds, preferably one or more polyphenols, in a total amount in the range from 0.1 wt.% to 25 wt.%, preferably in the range from 0.5 wt.% to 15 wt.%, more preferably in the range from 1 wt.% to 10 wt.%, particularly preferably in the range from 2 wt.% to 8 wt.%,
and
(c) optionally one or more orally consumable liquid diluents, preferably selected from the group consisting of ethanol, 1,2-propylene glycol, vegetable oil triglycerides, triacetin and/or glycerol, preferably in an amount in the range from 1 to 75 wt.%, preferably in the range from 5 to 50 wt.%, particularly preferably in the range from 10 to 40 wt.%,
in each case relative to the total weight of the mixture.

6. The use as claimed in one of claims 3 to 5, wherein the extract is obtained by a method comprising the following steps:
a) extraction of leaves and optionally stems with a suitable extractant, preferably selected from the group consisting of water, sub- or supercritical water, supercritical CO₂, water-ethanol mixtures, ethanol, ethyl acetate, n-heptane and n-hexane, at a temperature in the range from 0°C up to the boiling point of the particular extractant or extractants, at normal pressure, reduced or increased pressure, preferably by Soxhlet, countercurrent, percolation or simple sieve basket methods, so that a primary extract is obtained,
b) optionally concentrating the primary extract obtained in step a), preferably by distillation or other evaporative or pervaporative technique,
c) treatment of the primary extract (optionally concentrated in step b)) with one or more adsorbents, preferably selected from the group consisting of silica gel, activated charcoal, kieselguhr, aluminum oxide, basic, acid or neutral ion exchangers, preferably in the batch or column method, so that a purified extract (secondary extract) is obtained,
d) drying of the secondary extract obtained in step c), preferably by an evaporative or pervaporative technique,
e) optionally mixing the dried secondary extract obtained in step d) with a suitable diluent or a mixture of two or more diluents, preferably ethanol, 1,2-propylene glycol, vegetable oil triglyceride(s), triacetin and/or glycerol, so that preferably a solution is obtained.

7. The use as claimed in one of claims 2 to 6, wherein the weight ratio of constituent (a) to the total amount of phenolic compounds, preferably to the total amount of polyphenols, of constituent (b) is in the range from 100:1 to 1:10, preferably in the range from 50:1 to 1:5, more preferably in the range from 10:1 to 1:1, particularly preferably in the range from 5:1 to 1:1,
in each case relative to the total weight of the mixture.

8. An orally consumable preparation, containing
(i-a) rubusoside in an amount in the range from 1-200 mg/kg, preferably in the range from 10-150 mg/kg, more preferably in the range from 30-100 mg/kg, particularly preferably in the range from 50-100 ppm, particularly preferably in the range from 65-100 mg/kg, in each case relative to the total weight of the orally consumable preparation, in the form of a mixture as defined in one of claims 2 to 7, preferably in the form of an extract of *Rubus suavissimus,*
(i-b) one or more bitter, sour and/or astringent-tasting substances, in an amount which, in an orally consumable comparative preparation of otherwise identical composition but without constituent (i-a), tastes perceptibly bitter, sour and/or astringent,
and the amount of constituent (i-a) is sufficient to mask, reduce or suppress the bitter, sour and/or astringent taste impression of the bitter, sour and/or astringent-tasting substances, in comparison with the comparative preparation,
wherein preferably constituent
(i-b) is present in an amount that is twice as high as or higher than
- the taste recognition threshold of the bitter, sour or astringent-tasting substance or the lowest taste recognition threshold of the bitter, sour and/or astringent-tasting substance, when this imparts at least two or all of the taste impressions bitter, sour and astringent, if the preparation only contains one bitter, sour and/or astringent-tasting substance,
or
- the lowest taste recognition threshold of the bitter, sour and/or astringent-tasting substances, if the preparation contains more than one bitter, sour and/or astringent-tasting substance,
with the exception of a preparation containing 12.50 wt.% butter (82% fat), 6 wt.% Sugar (saccharose), 5 wt.% skimmed milk powder, , 2.50 wt.% glucose syrup (72%), 0.65 wt.% emulsifier SE 30 (Grindstedt Products, Denmark), 0.20 wt.% vanilla flavor (Product 222292, Symrise), 2.00 wt.% sorbitol, 0.01 wt.% Rebaudioside A, 0.010 wt.% extract from *Rubus suavissimus,* containing 5 wt.% Rubusoside, 0.01 wt.% hesperetin (2.5% in 1,2-propylene glycol), 0.05 wt.% phoretin (2.5% in 1,2-propylene glycol)" 0.0001 wt.% o-coumaric acid and skimmed milk up to 100 wt.%.

9. The orally consumable preparation as claimed in claim 8, wherein constituent
(i-b) comprises one or more sour and optionally astringent-tasting substances in an amount which, in an orally consumable comparative preparation of otherwise identical composition but without constituent (a), tastes perceptibly sour and optionally additionally astringent,
and/or
wherein constituent
(i-b) comprises one or more sour and astringent-tasting substances, which are preferably selected from the group consisting of ascorbic acid, benzoic acid, glucuronic acid, adipic acid, glutaric acid, malonic acid, succinic acid, malic acid, acetic acid, citric acid, tartaric acid, phosphoric acid, quercitrin, gallic or ellagic acid esters of carbohydrates, and in particular pentagalloylglucose, optionally galloylated catechins, optionally galloylated epicatechins, proanthyocyanidins, procyanidins, thearubigenin, gamma oryzanol, caffeic acid or esters thereof, and in particular chlorogenic acid and isomers thereof.

10. The orally consumable preparation as claimed in claim 8 or 9, additionally containing
(ii) one or more additional bitter-masking flavors and/or flavoring materials, and optionally
(iii) one or more additional aroma substances, wherein preferably at least one aroma substance is an aroma substance that suppresses malodors,
and optionally
(iv) one or more salivation-promoting flavors and/or flavoring materials,
and optionally
(v) one or more auxiliary materials or carriers.

11. The orally consumable preparation as claimed in one of claims 8 to 10, wherein the preparation is a pharmaceutical preparation or a preparation serving for nutrition, oral hygiene or pleasure, preferably selected from the group consisting of fermented milk products, and preferably sour milk, yogurt, kefir, sour cream, quark, cheese, fermented soya products, preferably tempeh, tofu, soya yogurt, fermented cereal products, fermented meat products, unfermented or fermented fruit and vegetable juices, other vegetable and fruit preparations and products obtained therefrom.

12. The orally consumable preparation as claimed in one of claims 8 to 11, containing
(ii) one or more additional bitter-masking flavors and/or flavoring materials, selected from the group consisting of
- sodium salts, preferably sodium chloride, sodium lactate, sodium citrate, sodium acetate, sodium gluconoate,
- hydroxyflavanones, preferably eriodictyol, homoeriodictyol,
- hesperetin and sodium salts thereof,
- hydroxybenzoic acid amides, preferably 2,4-dihydroxybenzoic acid vanillyl amide, 2,4-dihydroxybenzoic acid-N-(4-hydroxy-3-methoxybenzyl)amide-monosodium salt,
- hydroxydeoxybenzoins, preferably 2-(4-hydroxy-3-methoxyphenyl)-1-(2,4,6-trihydroxyphenyl)ethanone,
- hydroxyphenylalkanediones, preferably gingerdione-[2] and gingerdione-[3],
- diacetyl trimers,
- gamma-aminobutyric acid,
- divanillins,
- 4-hydroxydihydrochalcones, preferably phloretin,
- deoxybenzoins, preferably 2-(4-hydroxyphenyl)-1-(4-hydroxy-3-methoxyphenyl)ethanone, and
- hydroxyflavans, preferably 3',7-dihydroxy-4'-methoxyflavan,
and optionally
(iv) one or more salivation-promoting flavors and/or flavoring materials, preferably selected from the group consisting of 2E,4E-decadienoic acid-N-isobutyl amide (pellitorin), 2E,4Z-decadienoic acid-N-isobutyl amide (cis-pellitorin), 2Z,4Z-decadienoic acid-N-isobutyl amide, 2Z,4E-decadienoic acid-N-isobutyl amide, 2E,6Z,8E-decatrienoic acid-N-isobutyl amide (spilanthol), 2E,6Z,8E,10E-dodecatetraenoic acid-N-(2-methylpropyl)amide (alpha-sanshool) and 2E,4E,8Z,11Z-tetradecatetraenoic acid-N-(2-hydroxy-2-methylpropyl)amide (bungeanool).

13. A method for masking, reducing or suppressing the bitter, sour and/or astringent effect of a compound, comprising the steps
a) providing one or more compounds that can produce a bitter, sour and/or astringent effect in the oral cavity,
b) providing an effective amount of rubusoside, preferably in the form of a mixture as defined in one of the claims 2 to 7,
and
c) mixing the components provided in step a) and b) in a ratio to one another such that the compound with a bitter, sour and/or astringent effect only produces this effect in attenuated form or not at all, when the mixture is placed in the oral cavity.

14. A method of production of an orally consumable preparation as claimed in one of claims 8 to 12, **characterized by** the following steps:
- providing an orally consumable starting mixture, which contains one or more bitter, sour and/or astringent-tasting substances in an amount such that said starting mixture tastes perceptibly bitter, sour and/or astringent,
- providing rubusoside, preferably in the form of a mixture as defined in one of claims 2 to 7 or the individual constituents of said mixture,
- mixing the rubusoside and the orally consumable starting mixture, so that the amount of rubusoside is sufficient to mask, reduce or suppress the bitter, sour and/or astringent taste impression of the bitter, sour and/or astringent-tasting substance or substances, in comparison with the starting mixture.

15. A flavoring composition containing
(i-a) rubusoside in an amount in the range from 0.1 to 50 wt.%, preferably in the range from 0.5 to 30 wt.%, particularly preferably in the range from 1 to 25 wt.%,
(i-b) one or more phenolic compounds, preferably one or more polyphenols, from *Rubus suavissimus* in a total amount in the range from 0.1 wt.% to 25 wt.%, preferably in the range from 0.5 wt.% to 15 wt.%, more preferably in the range from 1 wt.% to 10 wt.%, particularly preferably in the range from 2 wt.% to 8 wt.%,
(ii) one or more additional bitter-masking flavors and/or flavoring materials, selected from the group consisting of eriodictyol, homoeriodictyol, hesperetin and sodium salts thereof, gamma-aminobutyric acid, divanillin, phloretin, and 3',7-dihydroxy-4'-methoxyflavan,
(iii) one or more malodor-suppressing aroma substances, selected from the group consisting of vanillin, ethylvanillin, 4-methoxy-2-hydroxybenzaldehyde, ethyl vanillin isobutyrate (= 3-ethoxy-4-isobutyryloxybenzaldehyde), Furaneol^{®} (2,5-dimethyl-4-hydroxy-3(2H)-furanone) and derivatives thereof, preferably homofuraneol, (= 2-ethyl-4-hydroxy-5-methyl-3(2H)-furanone), homofuronol (2-ethyl-5-methyl-4-hydroxy-3(2H)-furanone and 5-ethyl-2-methyl-4-hydroxy-3(2H)-furanone), maltol and derivatives thereof, preferably ethyl maltol, coumarin and derivatives thereof, gamma-lactones (and preferably gamma-undecalactone, gamma-nonalactone), delta-lactones (and preferably 4-methyldeltalactone, massoilactone, deltadecalactone, tuberolactone, delta-dodecalactone, delta-tetradecalactone, delta-hexadecalactone, delta-octadecalactone), methyl sorbate, diacetyl, 4-hydroxy-2(or 5)-ethyl-5(or-2)-methyl-3(2H)furanone, 2-hydroxy-3-methyl-2-cyclopentenone, 3-hydroxy-4,5-dimethyl-2(5H)-furanone, fruit esters and fruit lactones (and preferably acetic acid-n-butyl ester, acetic acid isoamyl ester, propionic acid ethyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid n-butyl ester, n-octanoic acid ethyl ester, ethyl-3-methyl-3-phenylglycidate, ethyl-2-trans-4-cis-decadienoate), 4-(p-hydroxyphenyl)-2-butanone, 1,1-dimethoxy-2,2,5-trimethyl-4-hexane, 2,6-dimethyl-5-hepten-1-al and phenylacetaldehyde,
(iv) optionally one or more salivation-promoting flavors and/or flavoring materials, selected from the group consisting of 2E,4E-decadienoic acid-N-isobutyl amide (pellitorin), 2E,4Z-decadienoic acid-N-isobutyl amide (cis-pellitorin), 2Z,4Z-decadienoic acid-N-isobutyl amide, 2Z,4E-decadienoic acid-N-isobutyl amide, 2E,6Z,8E-decatrienoic acid-N-isobutyl amide (spilanthol), 2E,6Z,8E,10E-dodecatetraenoic acid-N-(2-methylpropyl)amide (alpha-sanshool) and 2E,4E,8Z,11Z-tetradecatetraenoic acid-N-(2-hydroxy-2-methylpropyl)amide (bungeanool),
(v) optionally one or more auxiliary materials or carriers, selected from the group consisting of ethanol, 1,2-propylene glycol, vegetable oil triglycerides, triacetin and/or glycerol, preferably in an amount in the range from 1 to 75 wt.%, preferably in the range from 5 to 50 wt.%, particularly preferably in the range from 10 to 40 wt.%,
and
(vi) one, two, three, four, five, six, seven, eight, nine, ten or more volatile aroma substances with a vapor pressure greater than or equal to 0.01 Pa at 25°C, in particular with a vapor pressure greater than or equal to 0.025 Pa at 25°C, where the malodor-suppressing aroma substances of the constituent (iii) are excluded from the volatile aroma substances of the constituent (vi),
wherein the stated amounts refer in each case to the total weight of the flavoring composition.

## Revendications

1. Utilisation de rubusoside pour masquer, réduire ou réprimer une impression aromatique au goût amer, acide et/ou astringent d'une matière au goût amer, acide et/ou astringent.

2. Utilisation selon la revendication 1, **caractérisée en ce que** le rubusoside est utilisé sous forme de mélange comprenant
(a) le rubusoside,
et
(b) une ou plusieurs composés phénoliques, de préférence un ou plusieurs polyphénols, de préférence de manière comme ils apparient dans une espèce Rubus, de préférence dans Rubus suavissimus.

3. Utilisation selon la revendication 2, **caractérisée en ce que** le mélange est un extrait d'une espèce Rubus, de préférence il est un extrait des feuilles et éventuellement des tiges d'une espèce Rubus, de préférence des feuilles et éventuellement des tiges du Rubus suavissimus.

4. Utilisation selon la revendication 2 ou 3, **caractérisée en ce qu'**un, deux, trois ou plus composés phénoliques, de préférence un, deux, trois ou plus polyphénols d'élément (b) choisis parmi le groupe consistant d'acide ellagique, d'acide gallique et flavonoïdes, de préférence des glycosides de quercétine, de préférence de la rutine et de l'isoquercitrine.

5. Utilisation selon une des revendications 2 à 4, **caractérisée en ce que** le mélange comprend les éléments suivants :
(a) Rubusoside en une quantité dans la gamme de 0,1 à 50 % en poids, de préférence dans la gamme de 0,5 à 30 % en poids, de manière particulièrement préférée dans la gamme de 1 à 25 % en poids.
(b) un ou plus composés phénoliques, de préférence un ou plus polyphénols en une quantité totale dans la gamme de 0,1 à 25 % en poids, de préférence dans la gamme de 0,5 à 15 % en poids, plus préféré dans la gamme de 1 à 10 % en poids, de manière particulièrement préférée dans la gamme de 2 à 8 % en poids
et
(c) éventuellement un ou plusieurs diluants liquides qui peuvent être consommés oralement, de préférence choisis parmi le groupe consistant d'éthanol, d' 1,2-propylène glycol, de triglycéride d'huile végétale, de triacétine et/ou de glycérol, de préférence en une quantité dans la gamme de 1 à 75 % en poids, de préférence dans la gamme de 5 à 50 % en poids, de manière particulièrement préférée dans la gamme de 10 à 40 % en poids
respectivement référée à la quantité totale du mélange.

6. Utilisation selon une des revendications 3 à 5, **caractérisée en ce que** l'extrait est obtenu par une procédure comprenant les étapes suivantes:
a) L'extraction des feuilles et éventuellement des tiges avec un moyen d'extraction adéquat, de préférence choisi parmi le groupe consistant d'eau, d'eau sous-critique ou d'eau supercritique, de CO2 supercritique, du mélange eau-éthanol, d'éthanol, d'acétate d'éthyle, de n-heptane et de n-hexane, à une température de 0°C jusqu'à la température d'ébullition du ou des moyens d'extraction sous la pression normale, réduite ou élevée, de préférence par un procédé Soxhlet, un procédé à contre-courant, un procédé par percolation ou un procédé simple de tamis, par lequel un extrait primaire est obtenu,
b) éventuellement la concentration d'extrait primaire obtenu à l'étape a) de préférence dans des procédés par distillation ou des autres procédés d'évaporation ou de pervaporation,
c) Traitement d'extrait primaire éventuellement concentrer à l'étape b) avec un ou plusieurs adsorbants, de préférence choisi parmi le group consistant du gel de silice, du charbon actif, de la terre à diatomées, de l'alumine, d'échangeur d'ions basique, acide ou neutre, de préférence à l'aide du traitement par lots ou du procédé sur colonne que serve à obtenir un extrait (l'extrait secondaire) purifié.
d) Séchage d'extrait secondaire obtenu à l'étape c), de préférence par un procédé d'évaporation ou de pervaporation,
e) Le mélange éventuel d'extrait secondaire obtenu et séché à l'étape d) avec un diluant ou avec un mélange de deux ou plusieurs diluants, de préférence avec l'éthanol, le 1,2- propylène glycol, le(s) triglycéride(s) d'huile végétale, la triacétine et/ou le glycérine, si bien que, de préférence, une solution est obtenue

7. Utilisation selon une des revendications 2 à 6 **caractérisée en ce qu'**un rapport en poids d'élément (a) à la quantité totale des composés phénoliques, de préférence à la quantité totale des polyphénols, à l'étape (b) est compris dans la gamme de 100 : 1 à 1 : 10, de préférence dans la gamme de 50 : 1 à 1 : 5, plus particulièrement préférée dans la gamme de 10 : 1 à 1 : 1, de manière particulièrement préférée dans la gamme de 5 : 1 à 1 : 1,
respectivement référée à la quantité totale du mélange.

8. Préparation qui peut être consommés oralement contenant
(i-a) le Rubusoside en une quantité dans la gamme de 1 - 200 mg/kg, de préférence dans la gamme de 10 - 150 mg/kg, plus particulièrement préférée dans la gamme de 30 - 100 mg/kg, de manière particulièrement préférée dans la gamme de 50 - 100 ppm, de manière particulièrement préférée dans la gamme de 65 - 100 mg/kg, respectivement référée à la quantité totale des préparations qui peuvent être consommés oralement sous forme d'un mélange comme indiqué dans une des revendications 2 à 7, de préférence sous forme d'un extrait de Rubus suavissismus,
(i-b) une ou plusieurs matières ayant un goût amer, acide et/ou astringente en une quantité qui a, dans une préparation comparable et identiquement composé à consommer oralement mais sans élément (i-a), un goût amer, acide et/ou astringente de manière perceptible,
et la quantité d'élément (i-a) est suffisante pour masquer, réduire ou réprimer l'impression amer, acide et/ou astringente des matières ayant un goût amer, acide et/ou astringente en comparaison avec la préparation comparable,
dans lequel la matière
(i-b) est présente dans une quantité qui est deux fois plus élevée que ou plus élevée que
- la valeur de seuil concernant l'élément de distinction de goût de la matière ayant un goût amer, acide et/ou astringente ou de la valeur de seuil inférieur concernant l'élément de distinction de goût de la matière ayant un goût amer, acide et/ou astringente si celle-ci transmet au moins deux ou tous les impressions de goût amer, acide et/ou astringente si la préparation n'a qu'une matière ayant un goût amer, acide et/ou astringente,
ou
- la valeur de seuil inférieur concernant l'élément de distinction de goût amer, acide et/ou astringente, si la préparation a plus qu'une matière ayant un goût amer, acide et/ou astringente,
à l'exception d'une préparation des éléments contenant 12,50 % en poids de beurre (82% de matière grasse), 6,00 % en poids de sucre (sucrose), 5,00 % en poids de lait écrémé en poudre, 2,50 % en poids de sirop de glucose (72%), 0,65 % en poids d'émulsifiant SE 30 (Grindstedt Products, Danemark), 0,20 % en poids d'arôme de vanille (le produit 222292, Symrise), 2,00 % en poids de sorbitol, 0,01 % en poids de Re-bauside A, 0,010 % en poids d'extrait de Rubus suavissismus comtenant 5 % en poids de Rubusoside, 0,10 % en poids d'hespérétine (2,5% en 1,2-propylène-glycol), 0,05 % en poids de phlorétine (2,5% en 1,2-propylène-glycol), 0,0001 % en poids d'acide de coumarine et de lait écrémé à 100 % en poids.

9. Préparation qui peut être consommés oralement selon la revendication 8, dans laquelle l'élément
(i-b) comprend une ou plusieurs matières ayant un goût acide et éventuellement astringente dans une quantité qui a, dans une préparation comparable et identiquement composé à consommer oralement mais sans élément (a), un goût acide et éventuellement aussi astringente de manière perceptible,
et/ou
dans laquelle l'élément
(i-b) comprend une ou plusieurs matières ayant un goût acide et astringente qui sont choisi parmi le group consistant de l'acide ascorbique, de l'acide benzoïque, de l'acide glucuronique, de l'acide adipique, de l'acide glutarique, de l'acide malonique, de l'acide succinique, de l'acide malique, de l'acide acétique, de l'acide citrique, de l'acide tartrique, de l'acide phosphorique, du quercitrine, d'ester gallique ou d'ester ellagique des glucides, en particulier glucose de penta-galloyle, en option des catéchines galloylé, en option des épicatéchine galloylé, de la proanthocyanidine, de la procyanidine, théarubigenine, du gamma-oryzanol, de l'acide caféique ou ses esters, en particulier de l'acide chlorogénique et ses isomères.

10. Préparation qui peut être consommés oralement selon une des revendications 8 ou 9, contenant en outre
(ii) une ou plusieurs autres substances aromatiques et/ou saveurs masquant amèrement,
et éventuellement
(iii) une ou plusieurs autres substances aromatiques, dans laquelle au moins une substance aromatique est de préférence une substance aromatique supprimant les odeurs désagréables,
et éventuellement
(iv) une ou plusieurs substances aromatiques et/ou saveurs reproduisant la salive, et éventuellement
(v) une ou plusieurs matières auxiliaires ou supports.

11. Préparation qui peut être consommés oralement selon une des revendications 8 à 10, dans laquelle la préparation est une préparation pharmaceutique ou une de l'alimentation, de l'hygiène buccale ou une qui serve au plaisir, de préférence choisi parmi le groupe consistant des produits laitiers fermentés, de préférence du lait, du yaourt, du kéfir, de la crème acidulée, du caillebotte, du fromage, des produits à base de soja fermentés, de préférence le Tempeh, le Tofu, le yaourt de soja, des céréales fermentés, les produits de viande fermentés, les jus de fruits et de légumes non fermentés ou fermenté, autres préparations à base de légumes et de fruits et des produits qui en sont dérivés.

12. Préparation qui peut être consommés oralement selon une des revendications 8 à 11 contenant
(ii) une ou plusieurs autres substances et/ou saveurs masquant amèrement choisi parmi le groupe consistant
- des sels de sodium, de préférence du chlorure de sodium, du lactate de sodium, du citrate de sodium, d'acétate de sodium, du gluconate de sodium,
- des hydroxyflavones, de préférence l'ériodictyole, l'homoériodictyol,
- d'hespérétine et ses sels de sodium,
- les hydroxy-benjoin-amides, de préférence 2,4-dihydroxy-benjion-vanillylamide, 2,4-dihydroxy-benjion-acide-N-(4-hydroxy-3-méthoxybenzyle)amid-mono-sel de sodium,
- hydroxy-désoxy-benjoins, de préférence 2-(4-hydroxy-3-méthoxyphényle)-1-(2,4,6-trihydroxyphényl)éthanone,
- hydroxy-phényle-alcanediones, de préférence gingerdione-[2] et gingerdione-[3],
- diacétyle trimères,
- acide amino butyrique de gamma,
- divanillines,
- 4-hydroxy-dihydro-chalcones, de préférence phlorétine,
- deoxy-benzoine, de préférence 2-(4-hydroxyphényl)-1-(4-hydroxy-3-méthoxyphényle)éthanone, et
- hydroxy flavanes, de préférence 3',7-dihydroxy-4'-méthoxyflavan,
et éventuellement
(iv) une ou plusieurs substances aromatiques et/ou saveurs reproduisant la salive, de préférence choisi parmi le groupe consistante de 2E,4E-décadiénique-N-isobutylamides (pellitorine), 2E,4Z-décadiénique-N-isobutylamides (cis-Pellitorine), 2Z,4Z-décadiénique-N-isobutylamides, 2Z,4E-décadiénique-N-isobutylamides, 2E,6Z,8E-décadiénique-N-isobutylamides (le Spilanthol), 2E,6Z,8E,10E-décadiénique -N-(2-méthylpropylène)amid (alpha-Sanshool) et 2E,4E,8Z,11Z-acide-tetra-decatétraène-N-(2-hydroxy-2-méthylpropylène)amid (bungeanool).

13. Procédé pour masquer, réduire ou réprimer d'effet amer, acide et/ou astringentes d'un composé contenant les étapes
a) Préparation d'une ou plusieurs composés qui peuvent deployer un effet amer, acide et/ou astringentes dans la cavité buccale,
b) Préparation d'une quantité efficace de Rubusoside, de préférence sous forme d'un mélange comme indiqué dans une des revendications 2 à 7,
et
c) Mélange des composantes préparés à l'étape a) et b) dans un rapport que l'effet de la composé ayant un effet amer, acide et/ou astringentes n'est que réduit ou pas atténué de tout à l'entrée du mélange dans la cavité buccale.

14. Préparation qui peut être consommés oralement selon une des revendications 8 à 12 **caractérisée par** les étapes suivantes :
- Préparation d'un mélange initial qui peut être consommés oralement et qui a une ou plusieurs matières ayant un goût amer, acide et/ou astringente en une quantité que le mélange initial a un goût amer, acide et/ou astringente de manière perceptible
- Préparation de Rubusoside, de préférence sous forme d'un mélange comme indiqué dans une des revendications 2 à 7 ou sous forme des composants individuels d'un tel mélange,
- Mélange du Rubusosid et le mélange initial qui peut être consommés oralement, en sorte que la quantité du Rubusoside est suffisante pour masquer, réduire ou réprimer une impression aromatique au goût amer, acide et/ou astringent d'une matière au goût amer, acide et/ou astringent en comparaison avec le mélange initial.

15. Compositions aromatiques contenant
(i-a) Rubusoside en une quantité dans la gamme de 0,1 à 50 % en poids, de préférence dans la gamme de 0,5 à 30 % en poids, de manière particulièrement préférée dans la gamme de 1 à 25 % en poids,
(i-b) une ou plusieurs composés phénoliques, de préférence un ou plusieurs polyphénols de Rubus suavissimus en une quantité totale dans la gamme de 0,1 % en poids à 25 % en poids, de préférence dans la gamme de 0,5 % en poids à 15 % en poids, de manière particulièrement préférée dans la gamme de 1 % en poids à 10 % en poids, de manière particulièrement préférée dans la gamme de 2 % en poids à 8 % en poids,
(ii) une ou plusieurs autres substances et/ou saveurs masquant amèrement choisi parmi le groupe consistante d'ériodictyol, d'homoériodictyol, d'hespérétin et leurs sels de sodium, de gamma-acide-amino-butyrique, de divanilline, de phlorétine, et de 3',7-dihydroxy-4'-méthoxyflavane,
(iii) une ou plusieurs autres substances aromatiques supprimant les odeurs désagréables choisi parmi le groupe consistante de vanilline, d'éthylvanilline, 4-méthoxy-2-hydroxybenzaldéhyde, d'éthylvanillineisobutyrate (= 3-éthoxy-4-isobutyryloxybenzaldéhyde), furanéol® (2,5-diméthyle-4-hydroxy-3(2H)-furanone) et ses dérivés, de préférence le furaneol d'homo (= 2-éthyle-4-hydroxy-5-méthyle-3(2H)-furanone), le furaneol d'homo (2-éthyle-5-méthyle-4-hydroxy-3(2H)-furanone et 5-éthyle-2-méthyle-4-hydroxy-3(2H)-furanone), le maltol et ses dérivés, de préférence l'éthyl maltol, la coumarine et ses dérivés, la gamma-lactone (de préférence gamma-undeca-lactone, gamma-nonalactone), delta-lactone (de préférence 4-méthyle delta-lactone, massoia lactone, delta-deca-lactone, tubero-lactone, delta-dodeca-lactone, delta-tetradeca-lactone, delta-hexa-deca-lactone, delta-octa-deca-lactone), méthyle sorbat, diacétyle, 4-hydroxy-2(ou 5)-éthyle-5(ou-2)-méthyle-3(2H)furanone, 2-hydroxy-3-méthyle-2-cyclopentenone, 3-hydroxy-4,5-diméthyle-2(5H)-furanone, l'ester ou la lactone de la fruit (de préférence l'acide acétique-n-butylester, l'acide acétique isoamyle ester, l'ester éthylique de l'acide, butyrate d'éthyle, le butyrate-n-butyle, l'ester d'isoamyle d'acide butyrique, 3-méthyle- butyrate d'éthyle, n-éthyl-hexanoate, n- éthyl-hexanoate d'ester d'allyle, n- éthyl-hexanoate-n-butyle, n-acide-octano-ester d'éthyle, éthyle-3-méthyle-3- phénylglycidate, éthyle-2-trans-4-cis-décadienoat), 4-(p-hydroxyphényle)-2-butanone, 1,1-diméthoxy-2,2,5-triméthyle-4-hexan, 2,6-diméthyle-5-hepten-1-al et phénylacetaldehyde,
(iv) éventuellement une ou plusieurs substances aromatiques et/ou saveurs reproduisant la salive, de préférence choisi parmi le groupe consistante de 2E,4E-décadiénique-N-isobutylamides (pellitorine), 2E,4Z-décadiénique-N-isobutylamides (cis-pellitorine), 2Z,4Z-décadiénique-N-isobutylamides, 2Z,4E-décadiénique-N-isobutylamides, 2E,6Z,8E-décadiénique-N-isobutylamides (le Spilanthol), 2E,6Z,8E,10E-décadiénique -N-(2-méthylpropylène)amid (alpha-Sanshool) et 2E,4E,8Z,11Z-tetra-deca-tétraène-acide-N-(2-hydroxy-2-méthylpropylène)amid (bungeanool),
(v) éventuellement un ou plusieurs matières auxiliaires ou supports, choisi parmi le groupe consistante d'éthanol, 1,2- le propylène glycol, le triglycéride d'huile végétale, Triacétine et/ou glycérine, de préférence en quantité dans la gamme de 1 à 75 % en poids, de préférence de 5 à 50 % en poids, de manière particulièrement préférée dans la gamme de 10 à 40 % en poids,
et
(vi) un, deux, trois, quatre, cinq, six, sept, huit, neuf, dix ou plus arômes volatils ayant une pression de vapeur inférieur ou égal à 0,01 Pa à 25°C, de préférence ayant une pression de vapeur inférieur ou égal à 0,025 Pa à 25°C, dans lequel substances aromatiques supprimant les odeurs désagréables d'élément (iii) sont exclues d'élément (vi),
dans lequel les données sur les quantités étant rapportés au poids total des compositions aromatiques.
